(19) Europäisches Patentamt / European Patent Office / Office européen des brevets

(11) **EP 4 776 676 A1**

(12) **EUROPEAN PATENT APPLICATION**
published in accordance with Art. 153(4) EPC

(43) Date of publication:
**15.07.2026 Bulletin 2026/29**

(21) Application number: **24870420.7**

(22) Date of filing: **06.09.2024**

(51) International Patent Classification (IPC):
*H04W 16/28* (2009.01)

(52) Cooperative Patent Classification (CPC):
**H04B 7/0456; H04B 7/06; H04B 7/08; H04L 5/00; H04W 16/28**

(86) International application number:
**PCT/CN2024/117589**

(87) International publication number:
**WO 2025/066874 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023 CN 202311284929**

(71) Applicant: HUAWEI TECHNOLOGIES CO., LTD.
**Shenzhen 518129 (CN)**

(72) Inventors:
• **ZHANG, Siyuan**
  **Shenzhen, Guangdong 518129 (CN)**
• **ZHAO, Donghe**
  **Shenzhen, Guangdong 518129 (CN)**
• **XU, Weimin**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD AND APPARATUS**

(57)    This application provides a communication method and apparatus, and relates to the field of communication technologies. In the method, a first communication apparatus may determine that a configuration of an antenna in a device (for example, an access network device) needs to be updated from a first configuration to a second configuration, determine, for updating, an antenna that needs to be turned off and/or an antenna that needs to be turned on, and indicate to turn off and/or turn on the corresponding antennas. In this way, the configuration of the antenna in the access network device is flexibly updated. Because hardware of the access network device does not need to be replaced, a process of updating the antenna configuration can be simplified.

[FIG. 8]

**Description**

CROSS-REFERENCE TO RELATED APPLICATIONS

This application claims priority to Chinese Patent Application No. 202311284929.7, filed with the China National Intellectual Property Administration on September 28, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

A multiple input multiple output (multiple input multiple output, MIMO) technology is a key breakthrough technology for wireless communication, and is a crucial technology for improving a system capacity and an uplink/downlink sensing rate of wireless communication. In the MIMO technology, related technologies such as receive diversity, beamforming, and spatial multiplexing are used to achieve a multiplexing gain, a diversity gain, an interference cancellation gain, and an array gain, thereby finally multiplying system spectral efficiency and the system capacity, and meeting requirements for an increasingly large transmission rate and communication quality of wireless air interface communication. With continuous development of the MIMO technology, the MIMO technology also corresponds to more antennas.

Currently, if an antenna in a device needs to be updated, a staff needs to determine a location of the device, manually remove the original antenna in the device, install a new antenna in the device, and repeatedly test the replaced antenna in the device, until the replaced antenna successfully communicates, to complete replacement of the antenna in the device. It can be learned that a process of updating the antenna in the device is complex.

SUMMARY

Embodiments of this application provide a communication method and apparatus, to simplify a process of updating an antenna in a device.

According to a first aspect, an embodiment of this application provides a communication method. The method is performed by a first communication apparatus. The first communication apparatus may be an access network device, a software module or a hardware module (for example, a baseband unit, a baseband chip, or a baseband board) in the access network device, or the like. The method includes: determining that a configuration of an antenna needs to be updated from a first configuration to a second configuration, where an antenna in the first configuration and an antenna in the second configuration differ in at least one of a coverage area, a direction, and a strength that are of a beam; determining M antennas that need to be turned off and/or N antennas that need to be turned on in the X TRPs, where both N and M are positive integers, the first communication apparatus is deployed to communicate with X transmission and reception points TRPs, and X is an integer greater than 1; and sending first indication information to each of at least one of the X TRPs, where the first indication information indicates to turn off an antenna that is in each TRP and that belongs to the M antennas and/or turn on an antenna that is in each TRP and that belongs to the N antennas, and the second configuration is formed by turning off the M antennas and/or the N antennas in the first configuration.

It should be understood that the X TRPs may be TRPs deployed in a device (which may be a device in which the first communication apparatus is located, for example, is specifically the access network device) corresponding to the first communication apparatus, and the X TRPs may include an antenna included in the access network device. It may be further understood that the access network device may have a maximum of X TRPs in an on state. The TRP is a unit that can receive/send information. The TRP may be an AAU, an antenna array, and/or the like. This is not specifically limited in this embodiment of this application. The configuration of the antenna is a configuration of the antenna in the access network device. The antenna in the first configuration may also be referred to as an antenna included in the first configuration, or an antenna included by the first configuration, or an antenna corresponding to the first configuration. The antenna in the first configuration may be understood as that the antenna in the access network device is in the first configuration, or as an antenna in an on state in the access network device. A quantity of antennas in the first configuration may be the same as or different from a quantity of antennas in the second configuration. This is not limited in this embodiment of this application. The first configuration may be considered as an antenna configuration that is of the access network device and that exists before updating, and the second configuration may be considered as an updated antenna configuration of the access network device. In this embodiment of this application, an example in which the antenna in the first configuration is distributed on L TRPs and the antenna in the second configuration is distributed on K TRPs is used for description. Both L and K are positive integers.

In this embodiment of this application, when determining that the configuration of the antenna needs to be updated, the first communication apparatus may indicate to turn off a part of antennas deployed in the access network device and/or turn on a part or all of antennas in the access network device. In this way, the antenna configuration of the access network device can be updated in a timely manner. Because the antenna in the access network device does not need to be manually replaced, a process of updating the antenna in the access network device is simplified, and a process of updating the antenna in the access network device is reduced. In addition, the method provided in this embodiment of this application may be applied to updating of an antenna in any configuration in the access network device, for example, may be applied to updating of the configuration of the antenna in the access network device in a MIMO technology. That is, the method provided in this embodiment of this application has good applicability.

In a possible implementation, two manners of determining that the configuration of the antenna needs to be updated from the first configuration to the second configuration are provided, and are specifically Manner 1 and Manner 2 below. Manner 1: The first communication apparatus receives second indication information from a core network, thereby determining that the configuration of the antenna needs to be updated to the second configuration. Manner 2: The first communication apparatus may determine, based on one or both of communication quality and/or information about a served user that are of the first communication apparatus, that the configuration of the antenna needs to be updated from the first configuration to the second configuration.

In the foregoing implementation, in Manner 1, the first communication apparatus may update the configuration of the antenna based on an indication of the core network. In this way, a processing amount of the first communication apparatus can be reduced. In Manner 2, the first communication apparatus may determine, based on one or both of the communication quality of the first communication apparatus and the information about the served user, that the configuration of the antenna needs to be updated. In this way, the updated antenna configuration can improve the communication quality of the first communication apparatus and/or better provide a service for a user. In summary, this helps improve a communication status of the access network device.

In a possible implementation, the communication quality includes communication interference from the first communication apparatus; when the communication interference from the first communication apparatus is greater than or equal to a first threshold, a quantity of antennas in the second configuration is greater than a quantity of antennas in the first configuration; or when the communication interference from the first communication apparatus is less than a second threshold, a quantity of antennas in the second configuration is less than a quantity of antennas included in the first configuration; and the first threshold is greater than the second threshold.

In the foregoing implementation, when the communication interference from the first communication apparatus is large, a quantity of antennas in the first communication apparatus may correspondingly increase. This helps enhance the communication status of the access network device and reduce impact of communication interference. Alternatively, when the communication interference from the first communication apparatus is small, a quantity of antennas in the first communication apparatus may be relatively reduced. In this way, when the communication quality of the first communication apparatus is ensured, antennas in the on state may be reduced, thereby helping reduce energy consumption of the access network device.

In a possible implementation, the information about the served user includes a quantity of served users; when the quantity of served users of the first communication apparatus is greater than or equal to a third threshold, a quantity of antennas included in the second configuration is greater than a quantity of antennas included in the first configuration; or when the quantity of served users of the first communication apparatus is less than a fourth threshold, a quantity of antennas in the second configuration is less than a quantity of antennas included in the first configuration; and the third threshold is greater than the fourth threshold.

In the foregoing implementation, when the quantity of served users of the first communication apparatus is large, the quantity of antennas in the first communication apparatus may correspondingly increase. In this way, a higher-quality service can be provided for these users. Alternatively, when the quantity of served users of the first communication apparatus is small, the quantity of antennas in the first communication apparatus may be relatively reduced. In this way, energy consumption of the access network device can be reduced when the communication quality of the first communication apparatus is ensured.

In a possible implementation, the N antennas are distributed in one of the X TRPs; or the N antennas are distributed in at least two of the X TRPs.

In the foregoing implementation, the N antennas that need to be turned on may be distributed on one or at least two of the X TRPs. This indicates that an antenna in one or more of the X TRPs may be flexibly turned on by updating the configuration of the antenna. In this way, flexibility in updating the configuration of the antenna is high.

In a possible implementation, the antenna in the first configuration is distributed on L TRPs, and the L TRPs belong to the X TRPs, where L is a positive integer; and the M antennas are distributed in one of the L TRPs; or the M antennas are distributed in at least two of the L TRPs.

In the foregoing implementation, the M antennas that need to be turned off may be distributed on one or at least two of the L TRPs. This indicates that an antenna in one or more of the L TRPs may be flexibly turned off by updating the configuration of the antenna. This helps improve flexibility in updating the configuration of the antenna.

In a possible implementation, the antenna in the first configuration is distributed on L TRPs, and the L TRPs belong to the X TRPs, where L is a positive integer; and the L TRPs are deployed at different geographical locations; or the L TRPs are co-located.

In the foregoing implementation, the first configuration may be a plurality of types of antenna configurations. For example, the first configuration is a distributed MIMO configuration. In this case, the L TRPs may be deployed at different geographical locations. Alternatively, for example, the first configuration is co-located MIMO. In this case, the L TRPs may be co-located. Because the first configuration is the configuration that is of the antenna in the access network device and that exists before updating, configurations of the first configuration are enriched in the foregoing implementation. In addition, the foregoing implementation may support updating of configurations of a plurality of types of antennas. In this way, the implementation has good applicability.

In a possible implementation, the antenna in the first configuration is distributed on L TRPs, and the L TRPs belong to the X TRPs, where L is a positive integer; and any two of the L TRPs include a same quantity of antennas; or at least two of the L TRPs include different quantities of antennas.

It should be understood that, for example, when the first configuration is distributed MIMO or co-located MIMO, the antenna in the first configuration is distributed on L TRPs, and any two of the L TRPs may include different quantities of antennas or a same quantity of antennas, thereby enriching specific content of the first configuration.

In a possible implementation, the antenna in the first configuration is distributed on L TRPs, the antenna in the second configuration is distributed on K TRPs, and the L TRPs and the K TRPs all belong to the X TRPs, where L and K are positive integers; and after sending the first indication information to each of the at least one of the X TRPs, the method further includes one of the following: sending a weighting coefficient of an antenna in any one of the K TRPs to the any TRP; or separately sending an index corresponding to each of the K TRPs and a weighting coefficient of an antenna in each of the K TRPs to the K TRPs. The weighting coefficient is used to constrain at least one of a coverage area, a direction, and a strength of a beam of an antenna.

In the foregoing implementation, after the configuration of the antenna is updated, weighting coefficients of antennas in corresponding TRPs may be indicated to the K TRPs. The first communication apparatus may respectively indicate the weighting coefficients of the corresponding antennas in the K TRPs to the K TRPs. In this way, a TRP directly receives a weighting coefficient of an antenna corresponding to the TRP. Alternatively, the first communication apparatus may send the weighting coefficients of the antennas in the K TRPs and the weighting coefficients of the corresponding TRPs to the K TRPs. The first communication apparatus does not need to separately generate corresponding information for the K TRPs. This may help reduce a processing amount of the first communication apparatus.

In a possible implementation, K first signals corresponding to the K TRPs are obtained. Each of the K first signals is a first reference signal or an intermediate parameter received by any one of the K TRPs, and the intermediate parameter is determined based on the first reference signal received by the any TRP. Weighting coefficients of antennas in the K TRPs are determined based on the K first signals.

It should be understood that all the K first signals may be K first reference signals. Alternatively, all the K first signals may be K intermediate parameters. Alternatively, a part of the K first signals may be a first reference signal corresponding to a part of the K TRPs, or may be an intermediate parameter corresponding to the other part of the K TRPs. The intermediate parameter of any one of the K TRPs is, for example, a channel matrix corresponding to the any TRP, or an SVD decomposition result of the channel matrix of the any TRP.

In the foregoing implementation, the K first signals may have a plurality of implementations. For example, the K first signals are the K first reference signals; or the intermediate parameters respectively corresponding to the K TRPs; or the first reference signal of a part of the K TRPs and the intermediate parameter corresponding to the other part of the TRPs. In this way, content of the first signal is enriched. In addition, the weighting coefficients of the antennas in the K TRPs are determined based on the K first signals. This provides a plurality of manners of determining the weighting coefficient of the antenna. In addition, the first signals of the K TRPs are combined for a joint solution, so that a joint gain of the K TRPs can be implemented through a determined weighting implementation of the antennas in the K TRPs.

In a possible implementation, after determining the weighting coefficients of the antennas in the K TRPs, the method further includes: adjusting a weighting coefficient of an antenna in the any TRP based on an expected communication quality parameter of the antenna in the any TRP and an actual communication quality parameter of the antenna in the any TRP.

It should be understood that the expected communication quality parameter of the antenna in the any TRP may be preconfigured or predefined in the first communication apparatus, for example, may be configured in the first communication apparatus by using a protocol, or may be received by the first communication apparatus from the core network. This is not limited herein. The communication quality parameter indicates, for example, a delay and/or a signal strength of the any TRP.

In the foregoing implementation, the first communication apparatus may adjust a value of the weighting coefficient of the antenna in the any TRP based on the communication quality parameter of the antenna in the any TRP, so that an adjusted weighting coefficient of the antenna can conform to the communication quality parameter of the antenna.

In a possible implementation, the antenna in the second configuration is distributed on K TRPs, the K TRPs all belong to the X TRPs, where K is a positive integer, and the method further includes: receiving a channel calibration parameter of an antenna in any one of the K TRPs. The channel calibration parameter of the any TRP includes one or both of a physical parameter and a transmission parameter that are of the antenna in the any TRP, and is used to calibrate the antenna in the any TRP.

In the foregoing implementation, the first communication apparatus may not need to calculate the channel calibration parameter of the antenna in the any TRP, thereby reducing a calculation amount of the first communication apparatus.

In a possible implementation, the antenna in the second configuration is distributed on K TRPs, the K TRPs all belong to the X TRPs, where K is a positive integer, and the method further includes: measuring a second reference signal from any one of the K TRPs, to determine a transmission parameter of an antenna in the any TRP; and sending the transmission parameter of the antenna in the any TRP to the any TRP. The transmission parameter of the antenna in the any TRP is used to calibrate the antenna in the any TRP.

In the foregoing implementation, the first communication apparatus may measure K second reference signals corresponding to the K TRPs, to determine transmission parameters of the antennas in the K TRPs. This provides another manner of determining the transmission parameters of the antennas in the K TRPs.

In a possible implementation, the transmission parameter of the antenna in the any TRP indicates one of the following: at least one of a delay, a phase, or an amplitude of the antenna in the any TRP; or at least one of a delay difference, a phase difference, or an amplitude difference between one antenna and another antenna that are in the any TRP. In the foregoing implementation, a plurality of implementations of the transmission parameter are provided.

In a possible implementation, the physical parameter of the antenna in the any TRP includes: a quantity of antennas in an on state; and an arrangement manner of the antennas in the on state; or a standard of the antenna in the on state. In the foregoing implementation, an implementation form of the physical parameter is provided.

According to a second aspect, an embodiment of this application provides a communication apparatus. The communication apparatus may be the first communication apparatus in the first aspect, or a software module or a hardware module (for example, a baseband chip) in the first communication apparatus, or a large device including the first communication apparatus. The communication apparatus includes a corresponding means (means) or module configured to perform the first aspect or any possible implementation. For example, the communication apparatus includes a processing module (sometimes also referred to as a processing unit) and a transceiver module (sometimes also referred to as a transceiver unit).

For example, the processing module is configured to: determine that a configuration of an antenna needs to be updated from a first configuration to a second configuration, and determine M antennas that need to be turned off and/or N antennas that need to be turned on in X TRPs. Both N and M are positive integers. The transceiver module is configured to send the first indication information to each of at least one of the X TRPs.

The communication apparatus may be further configured to implement any possible implementation of the first aspect. Examples are not enumerated herein.

According to a third aspect, an embodiment of this application provides a communication apparatus, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the first aspect or the second aspect through a logic circuit or by executing code instructions.

In a specific implementation process, the communication apparatus may be a chip, and the processor may be a transistor, a gate circuit, a trigger, various logic circuits, or the like. A specific implementation of the processor is not limited in this embodiment of this application.

In an implementation, the communication apparatus may be a wireless communication device, to be specific, a computer device supporting a wireless communication function. Specifically, the wireless communication device may be a terminal, for example, a smartphone, or may be a radio access network device, for example, a base station. The system chip may also be referred to as a system on chip (system on chip, SoC), or briefly referred to as an SoC chip. The communication chip may include a baseband processing chip and a radio frequency processing chip. The baseband processing chip is also sometimes referred to as a modem (modem) or a baseband chip. The radio frequency processing chip is also sometimes referred to as a radio frequency transceiver (transceiver) or a radio frequency chip. In a physical implementation, some or all chips of the communication chip may be integrated into the SoC chip. For example, the baseband processing chip is integrated into the SoC chip, but the radio frequency processing chip is not integrated into the SoC chip. The interface circuit may be a radio frequency processing chip in the wireless communication device, and the processor may be a baseband processing chip in the wireless communication device.

In another implementation, the communication apparatus may be a part of devices in the wireless communication device, for example, an integrated circuit product such as a system chip or a communication chip. The interface circuit may be an input/output interface, an interface circuit, an output circuit, an input circuit, a pin, a related circuit, or the like in the chip or a chip system. The processor may alternatively be embodied as a processing circuit or a logic circuit.

According to a fourth aspect, an embodiment of this application provides a communication apparatus, including a processor and a memory. The memory is configured to store one or more computer programs, the one or more computer programs include computer-executable instructions, and when the communication apparatus runs, the processor executes the one or more computer programs stored in the memory, to enable the communication apparatus to perform the communication method according to any one of the first aspect and the possible implementations.

Optionally, the communication apparatus further includes another component, for example, an antenna, an input/output module, or an interface. Such components may be hardware, software, or a combination of software and hardware.

According to a fifth aspect, an embodiment of this application provides a chip system. The chip system includes a processor and an interface. The processor is configured to: invoke instructions from the interface and run the instructions, and when the processor executes the instructions, the communication method according to any one of the first aspect and the possible implementations is implemented.

According to a sixth aspect, an embodiment of this application provides a computer-readable storage medium. The computer-readable storage medium is configured to store a computer program or instructions. When the computer program or the instructions are run, the communication method according to any one of the first aspect and the possible implementations is implemented.

According to a seventh aspect, an embodiment of this application provides a computer program product including instructions. When the computer program product runs on a computer, the communication method according to any one of the first aspect and the possible implementations is implemented.

For beneficial effects of any one of the technical solutions in the second aspect to the seventh aspect, refer to the beneficial effects of the corresponding technical solution in the first aspect. Repeated content is not listed herein again.

BRIEF DESCRIPTION OF DRAWINGS

FIG. 1 is a diagram of a structure of a communication system to which an embodiment of this application is applicable;
FIG. 2 is a diagram of a structure of another communication system to which an embodiment of this application is applicable;
FIG. 3 is a diagram of a structure of still another communication system to which an embodiment of this application is applicable;
FIG. 4 is a diagram of a structure of yet another communication system to which an embodiment of this application is applicable;
FIG. 5A is a diagram of a structure of an access network device according to an embodiment of this application;
FIG. 5B is a diagram of a structure of another access network device according to an embodiment of this application;
FIG. 6 is a diagram of a structure of a TRP according to an embodiment of this application;
FIG. 7 is a diagram of a structure of still another access network device according to an embodiment of this application;
FIG. 8 is a diagram of a communication method according to an embodiment of this application;
FIG. 9 is a diagram of a first configuration and a second configuration according to an embodiment of this application;
FIG. 10 is a diagram of another first configuration and another second configuration according to an embodiment of this application;
FIG. 11 is a diagram of still another first configuration and still another second configuration according to an embodiment of this application;
FIG. 12A and FIG. 12B are diagrams of a method for determining a weighting coefficient of an antenna according to an embodiment of this application;
FIG. 13A and FIG. 13B are diagrams of an antenna calibration method according to an embodiment of this application;
FIG. 14 is a diagram of a structure of a communication apparatus according to an embodiment of this application;
FIG. 15 is a diagram of a structure of another communication apparatus according to an embodiment of this application; and
FIG. 16 is a diagram of a structure of still another communication apparatus according to an embodiment of this application.

DESCRIPTION OF EMBODIMENTS

To make objectives, technical solution, and advantages of embodiments of this application clearer, the following further describes embodiments of this application in detail with reference to the accompanying drawings.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including a singular item (piece) or any combination of plural items (pieces). For example, at least one of a, b, or c indicates a, b, c, a and b, a and c, b and c, or a, b, and c, where a, b, and c may be singular or plural.

As described in the background, to update an antenna in a device, hardware of the antenna in the device needs to be manually replaced. Therefore, an antenna updating process of the device is complex.

Therefore, an embodiment of this application provides a communication method. In the method, if a configuration (or briefly referred to as an antenna configuration) of an antenna in a device (for example, an access network device) needs to be updated from one (or one type of) configuration (for example, a first configuration) to another configuration (for example, a second configuration), a first communication apparatus may determine M antennas that need to be turned off and/or N antennas that need to be turned on, to indicate to turn off the N antennas and/or turn off the M antennas. In this way, the configuration of the antenna in the access network device is updated from the first configuration to the second configuration. In other words, the configuration of the antenna in the access network device is updated. In the method, the first communication apparatus may flexibly turn on and/or turn off the antenna, to update the antenna configuration of the access network device without replacing hardware of the antenna in the device. Therefore, a process of updating the antenna in the device is simplified. In addition, the method may be applied to updating of various antenna configurations, for example, may be applied to updating of an antenna configuration in a MIMO technology. In other words, the method has good universality.

The technical solutions provided in embodiments of this application may be applied to various communication systems (or networks) such as a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a 6th generation (6th generation, 6G) mobile communication system, or a system integrating a plurality of systems. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

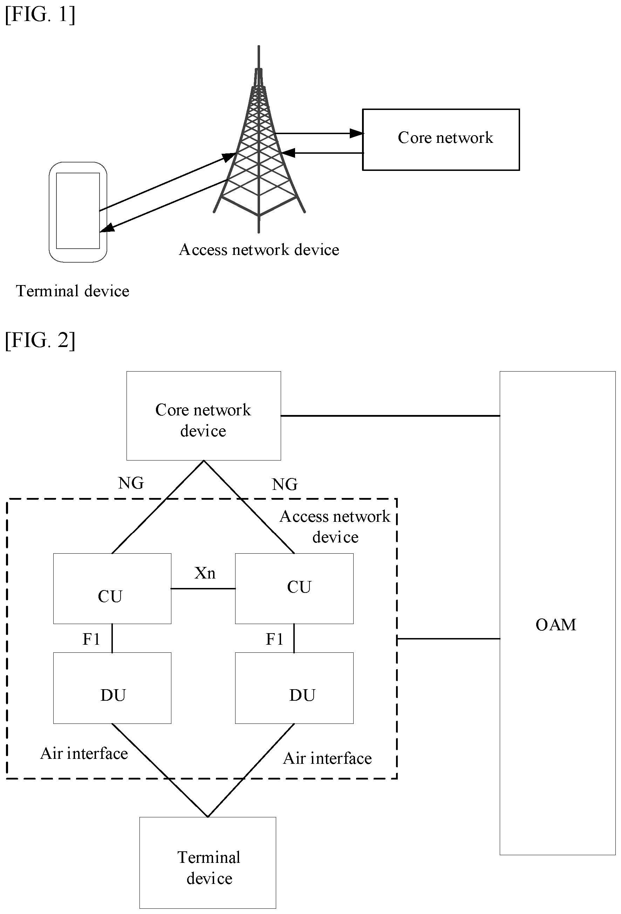

For example, FIG. 1 is a diagram of a structure of a communication system to which an embodiment of this application is applicable. As shown in FIG. 1, the communication system includes at least one terminal device, at least one network device, and a core network. In FIG. 1, an example in which a quantity of terminal devices and a quantity of access network devices are both 1 is used. Actually, the quantity of terminal devices and the quantity of core network devices are not limited. Any one of the at least one terminal device exchanges a signal with a part or all of at least one core network device. The signal may include information, signaling, data, or the like. The device may alternatively be replaced with a network element, an entity, a network entity, a communication device, a communication module, a node, a communication node, a communication apparatus, or the like. In this embodiment of this application, the device is used as an example for description. It may be understood that the terminal device in this embodiment of this application may be replaced with a first network element or a first communication apparatus, and the core network device may be replaced with a second network element or a second communication apparatus.

The following describes examples of possible implementations of the terminal device and the core network device.

    1. The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data, for example, a handheld device or a vehicle-mounted device with a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile communication network (public land mobile network, PLMN), or the like. This is not limited in this embodiment of this application.

As an example instead of a limitation, in this embodiment of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that is directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and devices that focus on only one type of application function and need to work with other devices such as smartphones, for example, various smart bands, or smart jewelry for monitoring physical signs.

In this embodiment of this application, an apparatus configured to implement a function of the terminal device may be the terminal device, or may be an apparatus that can support the terminal device in implementing the function, for example, a chip system. The apparatus may be installed in the terminal device or used together with the terminal device. In this embodiment of this application, the chip system may include a chip, or may include a chip and another discrete component. In this embodiment of this application, an example in which the apparatus configured to implement the function of the terminal device is a terminal device is merely used for description, and constitutes no limitation on the solutions in this embodiment of this application.

2. The access network device may be a device configured to communicate with the terminal device. The access network device is, for example, an access network device or a radio access network device. For example, the access network device may be a base station. The access network device in this embodiment of this application is, for example, a radio access network (radio access network, RAN) device (or node) that connects the terminal device to a wireless network. The base station may cover various names in the following in a broad sense, or may be replaced with the following names, for example, a NodeB (NodeB), an evolved NodeB (evolved NodeB, eNB), a next generation NodeB (next generation NodeB, gNB), a relay station, an access point, a transmission and reception point (transmission and reception point, TRP), a transmitting point (transmitting point, TP), a primary station, a secondary station, a multi-standard radio (multi-standard radio, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), a positioning node, and the like. The base station may be a macro base station, a micro base station, a relay node, a donor node, or the like, or a combination thereof. The base station may alternatively be a communication module, a modem, or a chip that is disposed in the foregoing device or apparatus. The base station may alternatively be a mobile switching center, a device that assumes a base station function in D2D, V2X, and M2M communication, a network side device in a 6G network, a device that assumes a base station function in a future communication system, or the like. The base station may support networks using a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). A specific technology and a specific device configuration that are used for the core network device are not limited in this embodiment of this application.

In some deployments, the access network device mentioned in this embodiment of this application may be a device including a CU or a DU, a device including a CU and a DU, or a device including a control plane CU node (a central unit control plane (CU control plane, CU-CP) node, a central unit user plane (CU user plane, CU-UP) node), and a DU node. For example, the access network device may include a gNB-CU-CP, a gNB-CU-UP, and a gNB-DU.

In some deployments, a plurality of RAN nodes cooperate to assist the terminal device in implementing radio access, and different RAN nodes respectively implement a part of functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio unit, for example, included in an RRU, an AAU, or an RRH.

The RAN node may support one or more categories of fronthaul interfaces, and different fronthaul interfaces respectively correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, in comparison with the CPRI, a part of downlink and/or uplink baseband functions, for example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or more of digital beamforming (beamforming, BF) or fast Fourier transform (fast Fourier transform, FFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, there are different split manners for the DU and RU, corresponding to different categories (categories, Cats) of eCPRIs such as eCPRI Cats A, B, C, D, E, and F.

The eCPRI Cat A is used as an example. For downlink transmission, splitting is performed for layer mapping. The DU is configured to implement the layer mapping and one or more functions before the layer mapping (to be specific, one or more of encoding, rate matching, scrambling, modulation, and the layer mapping), and other functions (for example, one or more of RE mapping, digital beamforming (beamforming, BF), or inverse fast Fourier transform (inverse fast Fourier transform, IFFT)/cyclic prefix (cyclic prefix, CP) addition) after the layer mapping are moved to the RU for implementation. For uplink transmission, splitting is performed for RE demapping. The DU is configured to implement demapping and one or more functions before the demapping (to be specific, one or more of decoding, de-rate matching, descrambling, demodulation, inverse discrete Fourier transform (inverse discrete Fourier transform, IDFT), channel equalization, and the RE demapping), and other functions (for example, one or more of digital BF or fast Fourier transform (FFT)/CP removal) after the demapping are moved to the RU for implementation. It may be understood that, for function descriptions of DUs and RUs corresponding to various categories of eCPRIs, refer to an eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

The terminal device may access the core network by using the access network device, and the core network may include one or more core network apparatuses (or network elements or functions).

The access network device and/or the terminal device may be deployed on land, including being deployed indoor or outdoor, handheld, or vehicle-mounted; may be deployed on the water; or may be deployed on an airplane, a balloon, and a satellite in the air. Scenarios in which the access network device and the terminal device are located are not limited in this embodiment of this application. In addition, the terminal device and the access network device may be hardware devices, or may be software functions running on dedicated hardware, or software functions running on general-purpose hardware, for example, virtualization functions instantiated on a platform (for example, a cloud platform), or may be entities including a dedicated or general-purpose hardware device and a software function. Specific configurations of the terminal device and the access network device are not limited in this application.

In this embodiment of this application, the apparatus configured to implement the function of the access network device may be an access network device, or may be an access network system including one or more access network devices, or may be an apparatus that can support the access network device in implementing the function, for example, a chip system, a hardware circuit, a software module, or a combination of a hardware circuit and a software module. The apparatus may be installed in the access network device or used together with the access network device. In this embodiment of this application, an example in which the apparatus configured to implement the function of the access network device is an access network device is merely used for description, and constitutes no limitation on the solutions in this embodiment of this application.

FIG. 2 is a diagram of a structure of a communication system to which an embodiment of this application is applicable. As shown in FIG. 2, devices in the communication system are connected to each other through an interface (for example, NG or Xn) or an air interface. FIG. 2 shows a core network device, an access network device (for example, a RAN device), a terminal device, an operation, administration and operation (operation, administration and maintenance, OAM), and the like. The access network device in FIG. 2 is, for example, the access network device shown in FIG. 1. Different from FIG. 1, FIG. 2 further shows a diagram of a structure of an access network device.

The access network device may serve as an independent RAN node, or may include a plurality of RAN nodes, for example, include a CU and a DU. Optionally, the CU may be further split into a CU-CP and a CU-UP. At least one of the access network device, the core network device, the CU in the access network device, the DU in the access network device, the CU-CP in the access network device, or the CU-UP in the access network device in FIG. 2 may be considered as an example of the network device in FIG. 1.

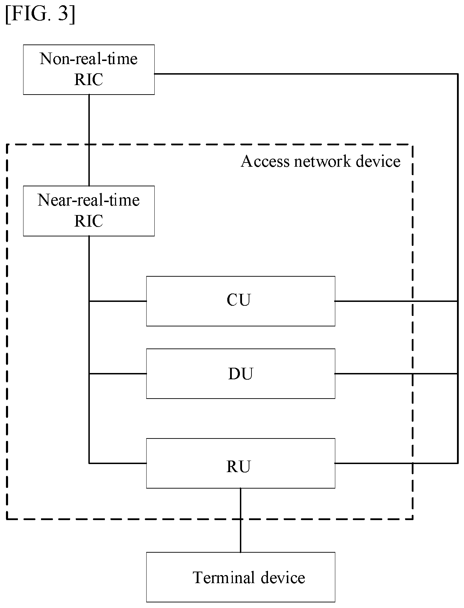

FIG. 3 is a diagram of a structure of a communication system to which an embodiment of this application is applicable. As shown in FIG. 3, the communication system includes a RAN intelligent controller (RAN intelligent controller, RIC). The RIC includes a near-real-time RIC (near-real-time RIC, near-RT RIC) and a non-real-time RIC (non-real-time RIC, Non-RT RIC). The non-real-time RIC mainly processes non-real-time information, for example, latency-insensitive data. A latency of the data may be at a second level. A real-time RIC mainly processes near-real-time information, for example, latency-sensitive data. A latency of the data is at a level of tens of milliseconds. Optionally, the near-real-time RIC and the non-real-time RIC each may alternatively be independently deployed as a network element.

The near-real-time RIC may obtain information about a network side and/or a terminal device from an access network device (for example, at least one of a CU, a DU, and an RU) and/or a terminal device. The access network device in FIG. 3 is, for example, the access network device in FIG. 1.

Optionally, the near-real-time RIC may process the information, and send a processing result to a RAN node and/or the terminal device. Optionally, the processing result may be exchanged between the CU and the DU and/or between the DU and the RU. For example, the near-real-time RIC delivers the processing result to the DU, and the DU sends the processing result to the RU.

The non-real-time RIC may obtain information about a network side and/or a terminal side from a radio access device (for example, at least one of a CU, a DU, and an RU) and/or a terminal device. Optionally, the non-real-time RIC may also process the information, and send a processing result to a RAN node and/or the terminal device. Optionally, the processing result may be exchanged between the CU and the DU and/or between the DU and the RU. For example, the non-real-time RIC delivers the processing result to the DU, and the DU sends the processing result to the RU.

The near-real-time RIC and the non-real-time RIC each may alternatively be independently deployed as a network element. Optionally, the near-real-time RIC and the non-real-time RIC may alternatively serve as a part of another device. For example, the near-real-time RIC is deployed on the access network device (for example, the CU or the DU), and the non-real-time RIC is deployed on an OAM, a cloud server, a core network device, or another network device.

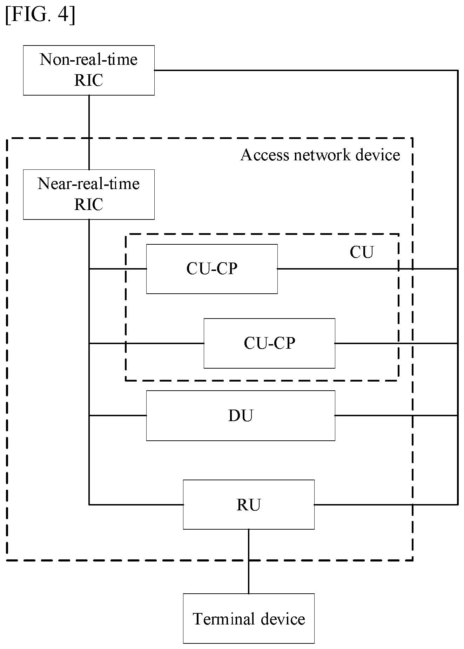

FIG. 4 is a diagram of a structure of a communication system to which an embodiment of this application is applicable. Compared with FIG. 3, in FIG. 4, a CU is separated into a CU-CP and a CU-UP.

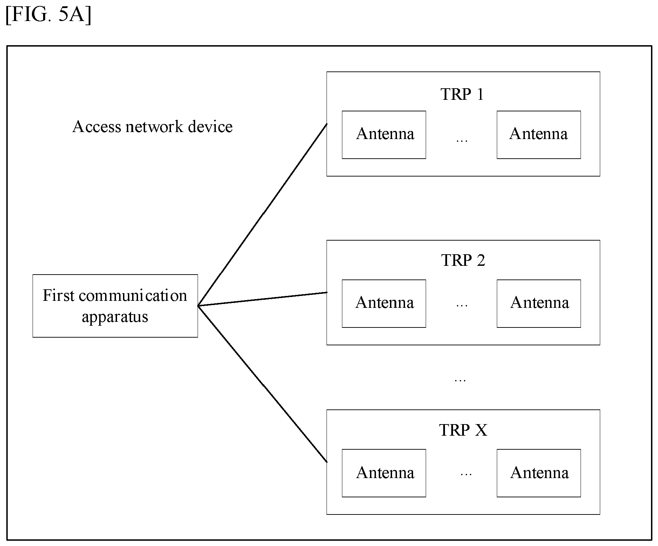

FIG. 5A is a diagram of a structure of an access network device according to an embodiment of this application. As shown in FIG. 5A, the access network device includes a first communication apparatus and X TRPs (specifically, a TRP 1, a TRP 2, ..., and a TRP X shown in FIG. 5A) that communicate with the first communication apparatus. X is an integer greater than 1. Unless otherwise specified, the apparatus in this embodiment of this application may be one or more hardware devices, a software module in the hardware device, a hardware module (for example, a chip) in the hardware device, or the like.

The first communication apparatus may be, for example, at least one of a CU, a DU, a CU-CP, a CU-UP, and an RIC. The CU may be, for example, the CU in any one of FIG. 2 to FIG. 4; the DU may be, for example, the DU in any one of FIG. 2 to FIG. 4; the CU-CP is, for example, the CU-CP in FIG. 4; the CU-UP is, for example, the CU-UP in FIG. 4; and the RIC is, for example, the RIC in FIG. 4. Alternatively, the first communication apparatus is, for example, a BBU, a baseband board (or referred to as a baseband processing board), a baseband chip, or a main control chip. One baseband unit may be deployed with one or more baseband boards, and one baseband processing board may be deployed with a main control chip and one or more baseband chips.

Optionally, when the first communication apparatus is a BBU and one of the X TRPs is an AAU, the first communication apparatus communicates with the TRP through a fronthaul interface.

One of the X TRPs is a unit that may independently implement information receiving/sending. A TRP may be understood as an independent transceiver unit or antenna unit in the access network device. A TRP may be, for example, a macro cell, a small cell, a pico cell, a femto cell, a remote radio head (remote radio head, RRH), an RRU+antenna (an antenna communicating with an RRU), a relay node, an active antenna processing unit (active antenna unit, AAU), or an antenna array. One TRP in this embodiment of this application may include (or distributed or configured with) one or more antennas. One antenna may include one or more antenna elements (or briefly referred to as elements).

Optionally, any two of the X TRPs include a same quantity of antennas. Alternatively, at least two of the X TRPs include different quantities of antennas. That the at least two of the X TRPs include different quantities of antennas includes that any at least two of the X TRPs all include different quantities of antennas; or any two of a part of the X TRPs include a same quantity of antennas, and any two of the other part of the X TRPs include different quantities of antennas.

It should be understood that the X TRPs included in the access network device may be understood as TRPs deployed in the access network device, or may be understood as X deployed TRPs that may communicate with the first communication apparatus. However, in this embodiment of this application, the antenna in the access network device may be flexibly turned off or turned on. Therefore, actually, there may be any quantity of TRPs in an on state in the access network device. For example, the TRP in the on state in the access network device may be a part or all of the X TRPs. This is not specifically limited in this embodiment of this application. The TRP in the on state may be understood as that there is at least one antenna in the on state in the TRP, or described as that not all antennas included in the TRP are in an off state. It should be understood that any two of the X TRPs may be provided by a same vendor, or may be provided by different vendors. This is not specifically limited in this embodiment of this application. Any two of the X TRPs may include a same type of antenna or different types of antennas. For example, the X TRPs include a TRP 1 and a TRP X, all antennas included in the TRP 1 are AAUs, and all antennas included in the TRP X are RRU+. Types of a plurality of antennas included in one TRP may also be the same or different. For example, the X TRPs include a TRP 1, the TRP 1 includes an antenna 1 and an antenna 2, the antenna 1 may be an AAU, and the antenna 2 may be an RRU+.

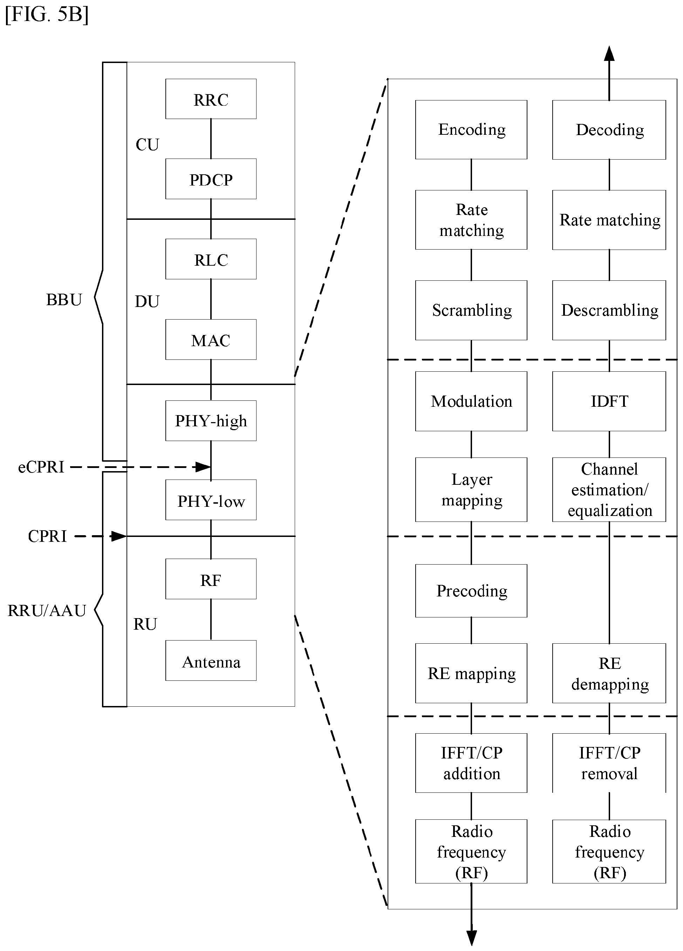

FIG. 5B is a diagram of another structure of an access network device according to an embodiment of this application. The access network device includes a BBU and an RRU/AAU. The BBU may be included in the first communication apparatus in FIG. 5A, and the RRU/AAU may be considered as an example of the antenna in FIG. 5B.

The BBU may be considered as a control network element, and the BBU may support a function above an eCPRI-based interface (for example, a function above a physical layer-high (physical layer-high, PHY-high), specifically including functions of a radio resource control layer (radio resource control, RRC), a packet data convergence protocol (packet data convergence protocol, PDCP) layer, a radio link control (radio link control, RLC), a media access control address (media access control address, MAC), and the PHY-high layer). Specifically, for example, the BBU may implement functions such as encoding, rate matching, scrambling, modulation, and layer mapping, and may also implement functions such as decoding, descrambling, inverse discrete Fourier transform (inverse discrete Fourier transform, IDFT), and channel estimation/equalization.

The RRU/AAU may be considered as an execution network element, and the RRU/AAU may support a function below the CPRI protocol-based interface (for example, a function below a radio frequency function). The RRU/AAU may include a radio unit (radio unit, RU), and the RU may further include an RF and an antenna.

The RRU/AAU and the BBU may communicate with each other through an intermediate network element. The intermediate network element may have various functions (for example, functions such as precoding, resource element (resource element, RE) mapping, and RE demapping) of a physical layer-low (PHY-Low). The intermediate network element is not specifically shown in FIG. 5B. Optionally, the intermediate network element may also be included in the first communication apparatus in FIG. 5A. In other words, both the BBU and the intermediate network element in FIG. 5B are examples of the first communication apparatus.

Specifically, the control network element may be specifically classified into a non-real-time control network element and a real-time control network element. The non-real-time control network element may be connected to at least one real-time control network element, and the real-time control network element can be connected to at least one execution network element. Optionally, one execution network element may be further connected to another execution network element. The non-real-time control network element is a network element configured to perform non-real-time control processing in a base station system, and is configured to configure, for the real-time control network element and/or the execution network element, a command or a parameter used in a real-time control processing process. Specifically, the non-real-time control network element may be a network element that supports a non-real-time wireless higher layer protocol stack function.

For example, the real-time control network element may be a distributed unit (distributed unit, DU), or the real-time control network element may be a real-time control unit that is independent of a DU in the conventional technology and that can implement a function of the real-time control network element, or may be a network element implemented by combining a DU in the conventional technology and the real-time control unit. In addition, the real-time control network element may alternatively be a BBU.

In addition, the execution network element is a network element that executes a real-time control service in the base station system. The execution network element may receive real-time control information from the real-time control network element, and then perform corresponding real-time control service processing based on the real-time control information. Specifically, the execution network element may be a network element that processes a service related to a radio signal (for example, an intermediate frequency signal or a radio frequency signal), for example, an RU, an RRU, and an RRH. The execution network element may alternatively be an antenna device connected to the foregoing network element that processes an intermediate radio frequency-related service, for example, an antenna feeder device (antenna feeder device, ALD) (also referred to as an antenna line device). In addition, the execution network element may be further a combination of the foregoing radio unit and the antenna device. For example, in a 5G NR system, the execution network element may alternatively be an AAU, that is, a processing unit that integrates an RRU (or an RRH) and an antenna device.

It should be understood that the intermediate network element may be configured to connect the real-time control network element and the execution network element, or may be configured to connect one execution network element and another execution network element. For example, if the real-time control network element is a baseband unit and the execution network element is a wireless unit, the intermediate network element may be an intermediate unit (baseband radio middle unit, BRMU) that connects the baseband unit and the wireless unit (for example, a baseband gateway, a radio frequency hub RRU hub, and various extended network elements); or if the execution network element is a wireless unit and the antenna device is another execution network element that needs to be connected to the wireless unit, the intermediate network element may also be an intermediate unit (radio antenna middle unit, RAMU) that connects the wireless unit and the antenna device. It should be understood that, when the intermediate network element is a BRMU, the intermediate network element may have a part of functions of a connected baseband unit (for example, a DU or a BBU) or wireless unit (for example, an RU or an RRU), to help interconnect baseband units having different performance parameters (for example, device versions, device interfaces, or protocol versions) and wireless units having different performance parameters on both sides. When the intermediate network element is an RAMU, the intermediate network element may have a part of functions of a connected radio unit (for example, an RU or an RRU) or antenna device (for example, an ALD), to help interconnect wireless units and antenna devices having different performance parameters (for example, device versions, device interfaces, or protocol versions) on both sides.

Optionally, if the CU is a non-real-time control network element and the DU is a real-time control network element, the CU may be connected to at least one DU through a backplane bus or an optical fiber.

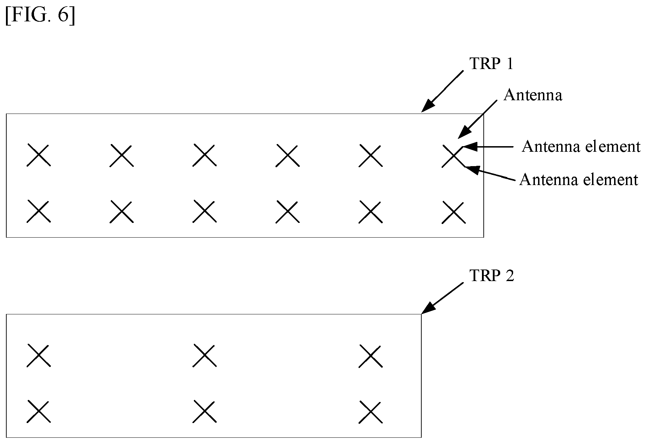

FIG. 6 is a diagram of a TRP according to an embodiment of this application. In FIG. 6, an example in which X TRPs include two TRPs (for example, a TRP 1 and a TRP 2 in FIG. 6) is used. As shown in FIG. 6, the TRP 1 includes 12 (pieces of) antennas, and each of the 12 antennas includes two antenna elements. The TRP 2 includes six antennas, and each of the six antennas also includes two antenna elements.

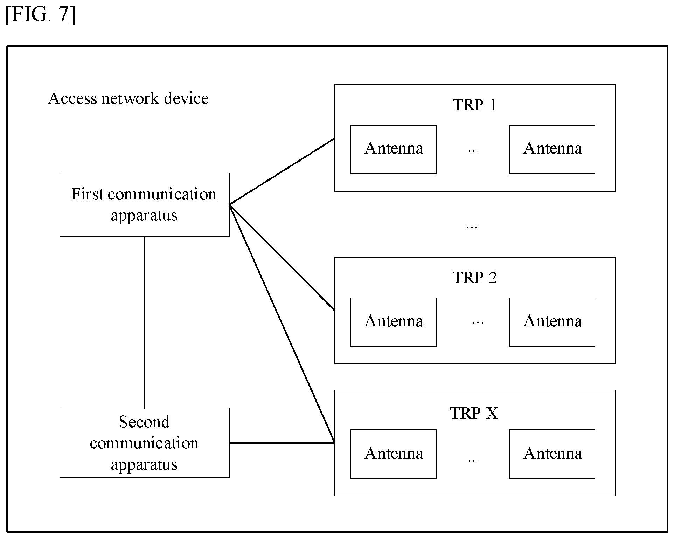

FIG. 7 is a diagram of a structure of an access network device according to an embodiment of this application. As shown in FIG. 7, the access network device includes a first communication apparatus and X TRPs (specifically, a TRP 1, a TRP 2, ..., and a TRP X shown in FIG. 7) that communicate with a plurality of first communication apparatuses. Different from FIG. 5A, in FIG. 7, a part of the X TRPs may further communicate with another communication apparatus (for example, the second communication apparatus shown in FIG. 7). The second communication apparatus may communicate with the first communication apparatus.

As shown in FIG. 7, the first communication apparatus may communicate with the X TRPs, and at least one (a TRP X is used as an example in FIG. 7) of the X TRPs may communicate with the second communication apparatus. The first communication apparatus may communicate with the TRP X through the second communication apparatus.

For content of the first communication apparatus and the TRP, respectively refer to the content of the first communication apparatus and the TRP that are described in FIG. 5A above. For an implementation of the second communication apparatus, refer to the content of the implementation of the first communication apparatus described in FIG. 5A. Repeated content is not listed herein again. For example, both the first communication apparatus and the second communication apparatus are baseband units, baseband boards, or baseband chips. For another example, the first communication apparatus is a baseband unit, and the second communication apparatus is a baseband chip.

The following describes the method provided in embodiments of this application with reference to the accompanying drawings. In the accompanying drawings corresponding to embodiments of this application, all steps represented by dashed lines are optional steps. In addition, the access network device in embodiments of this application is, for example, the access network device in any one of FIG. 1 to FIG. 5A, FIG. 5B, and FIG. 7, the first communication apparatus is, for example, the first communication apparatus in FIG. 5A, FIG. 5B, FIG. 6, or FIG. 7, the second communication apparatus is, for example, the second communication apparatus in FIG. 7, the terminal device is, for example, the terminal device in any one of FIG. 1 to FIG. 4, the X TRPs are, for example, the X TRPs in FIG. 5A, FIG. 5B, or FIG. 7, and the antenna is, for example, the antenna in FIG. 5A, FIG. 5B, FIG. 6, or FIG. 7. It should be understood that, if the technical solutions provided in embodiments of this application are applied to another communication system, a name and/or a function of an apparatus or a device may vary. This is not limited herein.

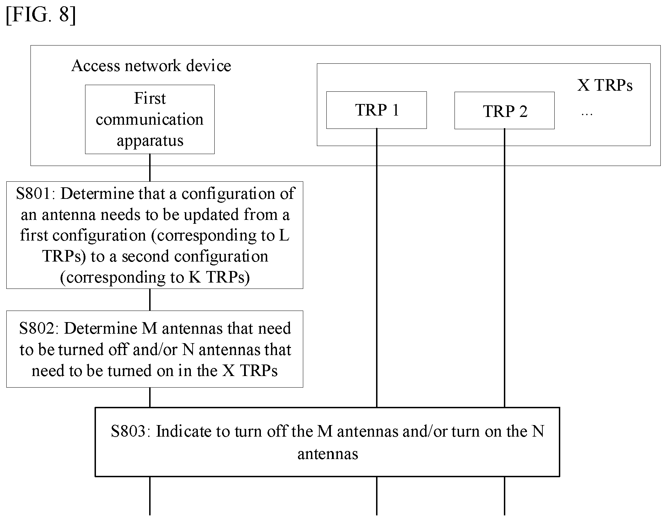

FIG. 8 is a diagram of a communication method according to an embodiment of this application. FIG. 8 shows three steps S801 to S803, which are separately described below.

S801: A first communication apparatus determines that a configuration of an antenna needs to be updated from a first configuration to a second configuration.

The configuration of the antenna may also be briefly referred to as an antenna configuration, and is a configuration presented by an antenna in a device (for example, an access network device) in which the first communication apparatus is located. It should be noted that, in this embodiment of this application, the antenna in the access network device may be flexibly turned off and/or turned on. Therefore, a quantity of antennas in an on state in the access network device changes flexibly. Therefore, unless otherwise specified, the antenna in the access network device in this embodiment of this application may be the antenna in the on state in the access network device. Correspondingly, the configuration of the antenna may be correspondingly understood as a configuration presented by the antenna in the on state in the access network device.

The configuration of the antenna in the access network device includes but is not limited to various configurations such as distributed multiple input multiple output (division multiple) MIMO or co-located (multi-panel) MIMO. In DMIMO, a plurality of TRPs in the access network device are distributed at different geographical locations. In this way, a signal coverage area of the access network device can be expanded. In co-located MIMO, a large quantity of antenna array elements in the access network device are decomposed into different antenna array planes, and the antenna array planes may send data through joint transmission (joint transmission, JT). In this way, a plurality of antenna array planes are logically extended, to achieve better sending effect.

The configuration of the antenna in the access network device is related to a physical parameter of the antenna in the access network device. Alternatively, it may be understood as that the physical parameter of the antenna in the access network device may affect the configuration of the antenna in the access network device. The physical parameter of the antenna represents a physical feature (or an attribute) of the antenna, and the physical parameter of the antenna includes, for example, at least one of a quantity, an arrangement manner, or a standard of antennas in the access network device. The quantity of antennas in the access network device may be specifically understood as the quantity of antennas in the on state in the access network device. The arrangement manner of the antennas may be considered as a distribution manner of the antennas, or may be understood as an arrangement structure of the antennas in the on state in the access network device. The standard of the antenna is a communication mode corresponding to the antenna in the access network device, for example, a 5G standard or a 4G standard.

The configuration of the antenna in the access network device is related to the physical parameter of the antenna in the access network device, and the physical parameter of the antenna in the access network device also affects information about a beam (beam) corresponding to the antenna in the access network device. Therefore, if configurations of the antennas in the access network device are different, information about beams corresponding to antennas in the access network device are different. The following first describes a concept of the beam.

The beam may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi co-located (quasi co-located, QCL) information, or the like. The beam may be considered as a communication resource, or may be considered as a spatial domain behavior of signal transmission. For example, the beam may be understood as a main lobe of a radiation pattern of an antenna array (beam is the main lobe of the radiation pattern of antenna array), or the beam may be understood as distribution of signal strength formed in different transmission directions in space after a signal is transmitted through an antenna. The beam may be a wide beam, a narrow beam, or another type of beam. Optionally, the first communication apparatus may adjust a weighting coefficient of the antenna, so that the beam of the access network device can point to different directions, thereby corresponding to different coverage areas.

After the concept of the beam is described, the following describes content of the information about the beam. The information about the beam may indicate at least one of a coverage area, a strength, and a direction. The coverage area of the beam may also be referred to as a beam coverage area or a coverage degree of the beam, and is an area covered by a signal of the beam. The coverage area of the beam includes a coverage area of the beam in a first direction and/or a coverage area of the beam in a second direction. The first direction is, for example, a direction along the ground, and the second direction is, for example, a direction perpendicular to the ground. The strength of the beam may be at least one of a maximum transmit power, an average transmit power, and a minimum transmit power that are of the signal of the beam. The direction of the beam may include the first direction and/or the second direction, and the first direction and the second direction may further specifically include a plurality of sub-directions. For example, the first direction may include a plurality of sub-directions such as east, south, west, or north along a ground direction.

In this embodiment of this application, an example in which the configuration of the antenna in the access network device needs to be updated from the first configuration to the second configuration is used. The following first describes the first configuration and the second configuration.

The first configuration may be understood as a configuration of an antenna currently in the on state in the access network device, or may be considered as a configuration that is of the antenna in the access network device and that exists before updating. An antenna in the first configuration may be distributed (or disposed or configured) on L TRPs, which may alternatively be considered as that the first configuration corresponds to L TRPs. In other words, in the first configuration, only L TRPs of the access network device are in an on state, or the L TRPs include an antenna in the on state. L is a positive integer. The L TRPs may be all or a part of the X TRPs included in the access network device. When the L TRPs are a part of the X TRPs, it indicates that in the first configuration, an antenna in all TRPs other than the L TRPs in the X TRPs is in an off state. Any two of the L TRPs include a same quantity, or at least two of the L TRPs include different quantities. This is not specifically limited. An antenna in a configuration is an antenna in the on state in the access network device in the configuration, which may also be described as an antenna included in an antenna or an antenna corresponding to the configuration. For example, the antenna in the first configuration may be described as an antenna included in the first configuration or an antenna corresponding to the first configuration. For another example, an antenna in the second configuration may be described as an antenna included in the second configuration or an antenna corresponding to the second configuration.

Optionally, the first configuration may be DMIMO. In this case, the L TRPs are distributed at different geographical locations. Optionally, the first configuration may be specifically symmetric DMIMO (or may be referred to as symmetric DMIMO). In this case, any two of the L TRPs include a same quantity of antennas. Alternatively, the first configuration may be specifically asymmetric DMIMO (which may also be referred to as asymmetric DMIMO). In this case, at least two of the L TRPs include different quantities of antennas.

Alternatively, the first configuration may be co-located MIMO. In this case, the L TRPs are co-located. Optionally, the first configuration may be specifically symmetric co-located MIMO (or may be referred to as symmetric co-located MIMO). In this case, any two of the L TRPs include a same quantity of antennas. Alternatively, the first configuration may be specifically asymmetric co-located MIMO (which may also be referred to as asymmetric co-located MIMO). In this case, at least two of the L TRPs include different quantities of antennas.

The foregoing describes an example of the first configuration. Actually, the first configuration may alternatively be any configuration. This is not specifically limited herein.

The second configuration may be understood as an updated configuration of the antenna in the access network device, or may be understood as an expected configuration of the antenna in the access network device. The antenna in the second configuration may be distributed on K TRPs, which may alternatively be considered as that the second configuration corresponds to K TRPs. K is a positive integer. In other words, in the second configuration, the access network device has only the K TRPs in the on state, or the K TRPs include an antenna in the on state. The K TRPs may be all or a part of the X TRPs included in the access network device. This is not limited herein. When the K TRPs are a part of the X TRPs, it indicates that in the second configuration, an antenna in all TRPs other than the K TRPs in the X TRPs is in the off state. Any two of the K TRPs include a same quantity, or at least two of the K TRPs include different quantities. This is not specifically limited.

Optionally, the second configuration may be DMIMO, which is specifically, for example, symmetric DMIMO or asymmetric DMIMO. Alternatively, the first configuration may be co-located MIMO, which is specifically, for example, symmetric co-located MIMO or asymmetric co-located MIMO. Certainly, the second configuration may further have a plurality of configurations. This is not specifically limited in this embodiment of this application.

L and K may have any value. For example, a value of L and a value of K are the same, or a value of L is less than a value of K, or a value of L is greater than a value of K. This is not limited herein.

It should be understood that the first configuration and the second configuration are two different configurations. Therefore, information about a beam of the antenna included in the first configuration is different from information about a beam of the antenna included in the second configuration. For content of the information about the beam, refer to the foregoing content. Details are not described herein again.

That the information about the beam of the antenna included in the first configuration is different from the information about the beam of the antenna included in the second configuration includes, for example, at least one of the following: a coverage area of the beam of the antenna included in the first configuration is different from a coverage area of the beam of the antenna included in the second configuration, a direction of the beam of the antenna included in the first configuration is different from a direction of the beam of the antenna included in the second configuration, and the coverage area of the beam of the antenna included in the first configuration is different from the coverage area of the beam of the antenna included in the second configuration. That the direction of the beam of the antenna included in the first configuration is different from the direction of the beam of the antenna included in the second configuration is, for example, the direction of the beam of the antenna included in the first configuration is the first direction, and the direction of the beam of the antenna included in the second configuration is the second direction.

The first configuration and the second configuration respectively correspond to different beams of antennas, and a physical parameter of the antenna included in the first configuration and a physical parameter of the antenna included in the second configuration may also be different. For content of the physical parameter of the antenna, refer to the foregoing descriptions. That the physical parameter of the antenna included in the first configuration is different from the physical parameter of the antenna included in the second configuration includes, for example, at least one of the following: a quantity of antennas included in the first configuration is different from a quantity of antennas included in the second configuration, a standard of the antenna included in the first configuration is different from a standard of the antenna included in the second configuration, and an arrangement manner of the antennas included in the first configuration is different from an arrangement manner of the antennas included in the second configuration. That the standard of the antenna included in the first configuration is different from the standard of the antenna included in the second configuration may be that a standard of at least one of the antenna included in the second configuration is different from the standard of the antenna included in the first antenna.

After content of the first configuration and the second configuration is described, the following describes a manner in which the first communication apparatus determines that the configuration of the antenna needs to be updated from the first configuration to the second configuration.

Manner 1: A second communication apparatus determines, based on an indication of a core network, that the configuration of the antenna in the access network device needs to be updated from the first configuration to the second configuration.

For example, the core network (specifically, for example, an access and mobility management network element (access and mobility management function, AMF) in the core network or a dedicated network element in the core network) sends second indication information to the first communication apparatus. The second indication information may indicate that the configuration of the antenna needs to be updated to the second configuration. In this way, the first communication apparatus receives the second indication information, and may determine that the configuration of the antenna in the access network device needs to be updated from the first configuration to the second configuration.

The second indication information may specifically indicate an updated configuration (namely, the second configuration) of the antenna, or the second indication information may specifically indicate a configuration (namely, the first configuration) that is of the antenna and that exists before updating and an updated configuration (namely, the second configuration) of the antenna. The second indication information may be carried in dedicated signaling or existing signaling. This is not specifically limited. For example, the second indication information may carry an identifier of the second configuration, and the first communication apparatus may determine, based on the identifier of the second configuration, that the configuration of the antenna needs to be updated to the second configuration.

For example, the access network device may prestore a first correspondence. The first correspondence may be configured in the access network device and the core network based on a protocol, or may be determined by the access network device and the core network device through negotiation. The first correspondence indicates identifiers (or referred to as indexes or numbers) respectively corresponding to a plurality of antenna configurations, and a configuration of an antenna corresponding to each of a plurality of identifiers.

For example, Table 1 shows an example of the first correspondence provided in this embodiment of this application.

Table 1

| Identifier of a configuration of an antenna | Configuration of the antenna |
|---|---|
| 00 | First configuration |
| 01 | Second configuration |
| 11 | Third configuration |

As shown in Table 1, if a value of the second indication information is 01, it is equivalent to indicating that the updated configuration of the antenna in the access network device is the second configuration.

In a possible implementation, the second indication information may further indicate the physical parameter of the antenna in the second configuration. For example, the identifier of the second configuration in the second indication information may further indicate the physical parameter of the antenna in the second configuration. Alternatively, the physical parameter of the antenna in the second configuration may be preconfigured or predefined in the access network device, for example, preconfigured in the access network device manually or based on a protocol.

Manner 2: The first communication apparatus automatically determines that the configuration of the antenna in the access network device needs to be updated from the first configuration to the second configuration.

In Manner 2, the first communication apparatus may determine, in any one of the following manners A1 to A3, that the configuration of the antenna in the access network device needs to be updated to the second configuration. The following provides separate descriptions.

A1. The first communication apparatus determines, based on communication quality of the first communication apparatus, that the configuration of the antenna needs to be updated from the first configuration to the second configuration. The communication quality indicates a communication status of the first communication apparatus (or the access network device).

For example, if the communication quality of the access network device is poor, the first communication apparatus may determine to increase a quantity of antennas in the access network device. Therefore, the first communication apparatus may select, from configurations of a plurality of antennas, an antenna configuration in which a quantity of antennas is greater than the quantity of antennas included in the first configuration, for example, determine to update the first configuration to the second configuration (that is, in this case, the quantity of antennas included in the second configuration is greater than the quantity of antennas included in the first configuration).

Optionally, the access network device may select, based on a second correspondence, the antenna configuration in which the quantity of antennas is greater than the quantity of antennas included in the first configuration (that is, determine the second configuration). The second correspondence may be preconfigured or predefined in the access network device. For example, the second correspondence may be manually configured in the access network device, or configured in the access network device based on a protocol, or received from the core network (for example, the AMF or the dedicated network element). This is not specifically limited in this embodiment of this application. The second correspondence indicates configurations of a plurality of antennas and a physical parameter of an antenna in a configuration of each antenna in the configurations of the plurality of antennas.

If the communication quality of the access network device is normal, the first communication apparatus determines that the configuration of the antenna may not be updated.

If the communication quality of the access network device is good, optionally, to save energy, the first communication apparatus may determine to reduce the quantity of antennas in the access network device. The first communication apparatus may select, from configurations of a plurality of antennas, an antenna configuration in which a quantity of antennas is less than the quantity of antennas included in the first configuration, for example, determine to update the first configuration to the second configuration (that is, in this case, the quantity of antennas included in the second configuration is less than the quantity of antennas included in the first configuration). Optionally, the access network device may alternatively select, based on a second correspondence, the antenna configuration in which the quantity of antennas is less than the quantity of antennas included in the first configuration.

For example, the communication quality may include other parameters such as communication interference. In this embodiment of this application, communication interference is mainly used as an example for illustration. The communication interference is, for example, channel sounding reference signal (sounding reference signal, SRS) interference. Greater communication interference indicates poorer communication quality. On the contrary, smaller communication interference indicates better communication quality.

Optionally, the access network device (specifically, for example, the first communication apparatus) measures a reference signal (for example, an SRS) from a terminal device, to determine communication interference. Certainly, there may be a plurality of manners of determining the communication interference. This is not specifically limited in this embodiment of this application.

If the communication interference is greater than or equal to a first threshold, the first communication apparatus may determine to increase the quantity of antennas in the access network device. Correspondingly, the first communication apparatus may select, from configurations of a plurality of antennas, an antenna configuration in which a quantity of antennas is greater than the quantity of antennas included in the first configuration, for example, determine to update the first configuration to the second configuration (that is, in this case, the quantity of antennas included in the second configuration is greater than the quantity of antennas included in the first configuration). The first threshold may be preconfigured or predefined in the access network device. For example, the first threshold is predefined in the access network device based on a protocol, or may be determined by the access network device and another device (for example, a terminal device or a core network) through negotiation.

If the communication interference is less than the first threshold and the communication interference is greater than or equal to the second threshold, it indicates that the communication quality of the access network device is normal. Therefore, the configuration of the antenna may not be updated. The first threshold is greater than a second threshold. For a manner in which the first communication apparatus obtains the second threshold, refer to the foregoing content of obtaining the first threshold. Details are not described herein again.

If the communication interference is less than the second threshold, the first communication apparatus may determine to reduce the quantity of antennas in the access network device. The first communication apparatus may select, from configurations of a plurality of antennas, an antenna configuration in which a quantity of antennas is less than the quantity of antennas in the first configuration, for example, determine to update the first configuration to the second configuration (that is, in this case, the quantity of antennas included in the second configuration is less than the quantity of antennas included in the first configuration).

A2. The first communication apparatus determines, based on information about a served user of the first communication apparatus, that the configuration of the antenna needs to be updated from the first configuration to the second configuration. The served user may be replaced with a served terminal device.

For example, the information about the served user may indicate communication quality of the served user. It should be understood that there may be one or more served users of the access network device. If there are a plurality of served users of the access network device, the communication quality of the served user may be an average value of communication quality corresponding to the plurality of users, or may be a smallest value, a largest value, or the like of communication quality corresponding to the plurality of users. This is not specifically limited in this embodiment of this application.

For example, if the communication quality of the served user is poor, the first communication apparatus may determine to increase the quantity of antennas in the access network device. Therefore, the first communication apparatus may select, from configurations of a plurality of antennas, an antenna configuration in which a quantity of antennas is less than the quantity of antennas in the first configuration, for example, determine to update the first configuration to the second configuration (that is, in this case, the quantity of antennas included in the second configuration is greater than the quantity of antennas included in the first configuration). Alternatively, if the communication quality of the served user is normal, the first communication apparatus may determine not to update the configuration of the antenna. Alternatively, if the communication quality of the served user is good, the first communication apparatus may determine to reduce the quantity of antennas in the access network device. Therefore, the first communication apparatus may select, from configurations of a plurality of antennas, an antenna configuration in which a quantity of antennas is less than the quantity of antennas in the first configuration, for example, determine to update the first configuration to the second configuration (that is, in this case, the quantity of antennas included in the second configuration is less than the quantity of antennas included in the first configuration).

In a possible implementation, the information about the served user indicates a quantity of served users.

If the quantity of served users is greater than or equal to a third threshold, the first communication apparatus may determine to increase the quantity of antennas in the access network device. Therefore, the first communication apparatus may select, from configurations of a plurality of antennas, an antenna configuration in which a quantity of antennas is less than the quantity of antennas in the first configuration, for example, determine to update the first configuration to the second configuration (that is, in this case, the quantity of antennas included in the second configuration is greater than the quantity of antennas included in the first configuration). For a manner of obtaining the third threshold, refer to the foregoing content of a configuration of obtaining the first threshold. Details are not described herein again.

If the quantity of served users is less than a third threshold and is greater than or equal to a fourth threshold, the first communication apparatus may determine not to update the configuration of the antenna. Alternatively, the information about the served users further includes a quantity of served users and a distribution direction. If the quantity of served users is less than a third threshold and is greater than or equal to a fourth threshold, but a distribution direction of the served user changes, for example, is updated from the first direction to the second direction, the first communication apparatus may determine to update the configuration of the antenna, for example, update a coverage direction of the beam of the antenna. Therefore, the first communication apparatus may select, from configurations of a plurality of antennas, an antenna configuration in which a coverage direction of a beam is different from that of the antenna included in the first configuration, that is, determine to update the first configuration to the second configuration (that is, in this case, a coverage direction of a beam of the antenna included in the first configuration is different from a coverage direction of a beam of the antenna included in the second configuration). Optionally, the quantity of antennas included in the first configuration may be the same as or different from the quantity of antennas included in the second configuration. This is not limited in this embodiment of this application.

If the quantity of served users is less than the fourth threshold, the first communication apparatus may determine to reduce the quantity of antennas in the access network device. Therefore, the first communication apparatus may select, from configurations of a plurality of antennas, an antenna configuration in which a quantity of antennas is less than the quantity of antennas in the first configuration, that is, determine to update the first configuration to the second configuration (that is, in this case, the quantity of antennas included in the second configuration is less than the quantity of antennas included in the first configuration). The third threshold is greater than the fourth threshold. For a manner of obtaining the fourth threshold, refer to the foregoing content of a manner of obtaining the first threshold. Details are not described herein again.

A3. The first communication apparatus determines, based on communication quality and information about a served user of the first communication apparatus, that the configuration of the antenna needs to be updated from the first configuration to the second configuration. The following provides descriptions by using an example in which the communication quality includes communication interference and the information about the served user indicates a quantity of served users.

If the communication interference is greater than or equal to a first threshold and/or the quantity of served users is greater than or equal to a third threshold, the first communication apparatus may determine to increase the quantity of antennas in the access network device. Therefore, the first communication apparatus may select, from configurations of a plurality of antennas, an antenna configuration in which a quantity of antennas is greater than the quantity of antennas in the first configuration, that is, determine to update the first configuration to the second configuration.

If the communication interference is greater than or equal to a second threshold and is less than a first threshold, and the quantity of served users is greater than or equal to a third threshold and is less than a fourth threshold, it is determined not to update the configuration of the antenna.

If the communication interference is less than a second threshold and the quantity of served users is less than a fourth threshold, the first communication apparatus may determine to reduce the quantity of antennas in the access network device. Therefore, the first communication apparatus may select, from configurations of a plurality of antennas, an antenna configuration in which a quantity of antennas is less than the quantity of antennas in the first configuration, that is, determine to update the first configuration to the second configuration.

Certainly, the foregoing describes an example of a manner in which the first communication apparatus determines that the configuration of the antenna needs to be updated from the first configuration to the second configuration. Actually, there are a plurality of manners in which the first communication apparatus determines that the configuration of the antenna needs to be updated from the first configuration to the second configuration. This is not specifically limited in this embodiment of this application.

S802: The first communication apparatus determines M antennas that need to be turned off and/or N antennas that need to be turned on in the X TRPs.

In a possible implementation, when the second indication information further indicates the physical parameter of the antenna included in the second configuration, the first communication apparatus may determine, based on the physical parameter that is of the antenna included in the second configuration and that is indicated by the second indication information, the antenna that needs to be turned on and/or the antenna that needs to be turned off when the first configuration is updated to the second configuration. It should be understood that, because content of the first configuration and content of the second configuration are uncertain, the first communication apparatus determines that for updating to the second configuration, a part of antennas in the X TRPs may need to be turned on, or a part of antennas in the X TRPs may need to be turned off, or a part of antennas in the X TRPs may need to be turned on and a part of antennas in the X TRPs may need to be turned off.

In another possible implementation, the first communication apparatus may determine, based on the second correspondence, the physical parameter of the antenna included in the second configuration, to determine the antenna that needs to be turned on and/or the antenna that needs to be turned off when the first configuration is updated to the second configuration. For content of the second correspondence, refer to the second corresponding content in S801. Details are not described herein again.

In this embodiment of this application, the following example is used: The configuration of the antenna in the access network device may be updated to the second configuration after the M antennas in the X TRPs are turned off and/or the N antennas in the X TRPs are turned on (which may also be described as follows: The K TRPs (or the second configuration) are obtained by turning off the M antennas and/or turning on the N antennas in the X TRPs based on the first configuration). In this example, the first communication apparatus may determine that, for updating to the second configuration, the antenna that needs to be turned on is the N antennas, and/or the antenna that needs to be turned off is the M antennas. N and M are both positive integers. N and M may have any value. For example, a value of N and a value of M are the same, or a value of N is less than a value of M, or a value of N is greater than a value of M.

When the first communication apparatus determines to turn on the N antennas, the N antennas may be distributed on one of the X TRPs included in the access network device. The TRP may be one of the L TRPs, or one of the X TRPs other than the L TRPs. Alternatively, the N antennas may be distributed on at least two of the X TRPs included in the access network device, and the at least two TRPs may all belong to the L TRPs, or a part of the at least two TRPs belongs to the L TRPs, and the other part of the TRPs belongs to the TRP in the X TRPs other than the L TRPs, or a part of the at least two TRPs all belongs to the TRP in the X TRPs other than the L TRPs.

When the first communication apparatus determines to turn off the M antennas, the M antennas may be distributed on one of the L TRPs, or distributed on at least one of the L TRPs. This is not specifically limited in this embodiment of this application.

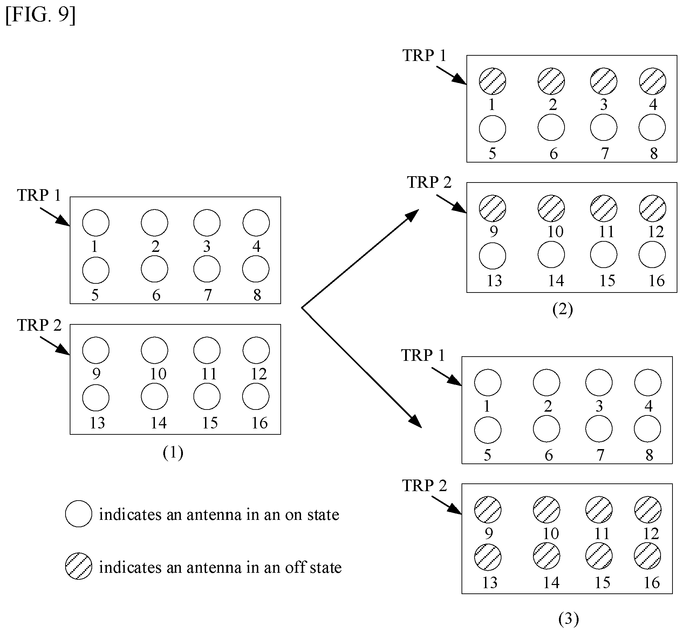

For example, FIG. 9 is a diagram of a first configuration and a second configuration according to an embodiment of this application. (1) in FIG. 9 may be considered as an example of the first configuration, and (2) and (3) in FIG. 9 may be considered as two examples of the second configuration. In FIG. 9, an example in which the X TRPs included in the access network device include a TRP 1 and a TRP 2, the TRP 1 includes an antenna 1 to an antenna 8, and the TRP 2 includes an antenna 9 to an antenna 16 is used.

As shown in (1) in FIG. 9, in the first configuration, the L TRPs include the TRP 1 and the TRP 2, and all antennas included in the TRP 1 and the TRP 2 are in the on state.

As shown in (2) in FIG. 9, in the second configuration, the K TRPs include the TRP 1 and the TRP 2, an antenna 5 to the antenna 8 in the TRP 1 are in the on state, and an antenna 13 to the antenna 16 in the TRP 2 are in the on state. In this case, the M antennas include the antenna 1 to an antenna 4 in the TRP 1 and the antenna 13 to the antenna 16 in the TRP 2.

Alternatively, as shown in (3) in FIG. 9, in the second configuration, the K TRPs include the TRP 1, and the antenna 1 to the antenna 8 in the TRP 1 are in the on state. In this case, the M antennas include the antenna 9 to the antenna 16 in the TRP 2.

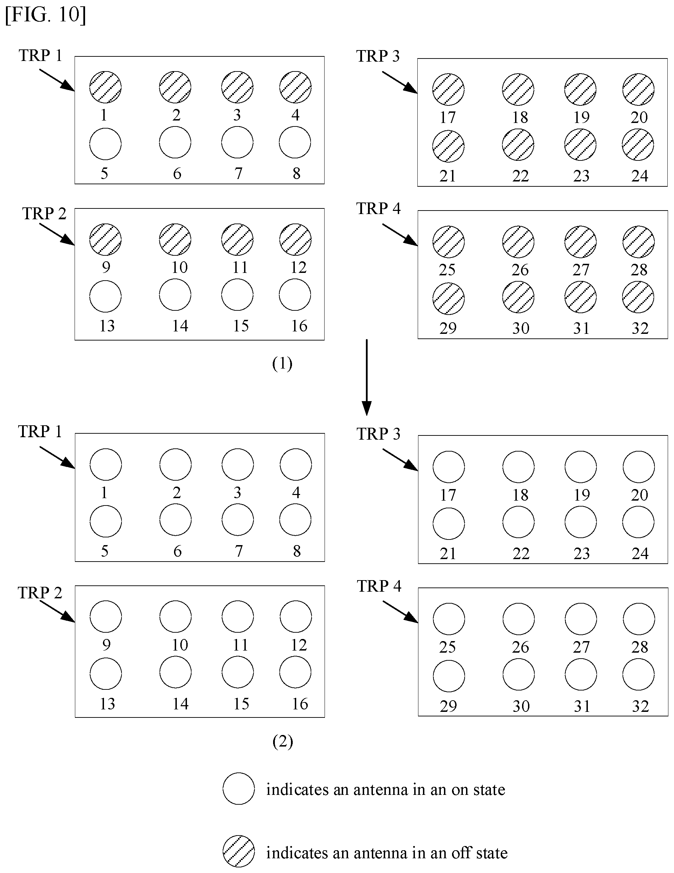

For example, FIG. 10 is a diagram of a first configuration and a second configuration according to an embodiment of this application. (1) in FIG. 10 may be considered as an example of the first configuration, and (2) in FIG. 10 may be considered as an example of the second configuration. In FIG. 10, an example in which the X TRPs included in the access network device include a TRP 1, a TRP 2, a TRP 3, and a TRP 4, the TRP 1 includes an antenna 1 to an antenna 8, the TRP 2 includes an antenna 9 to an antenna 16, the TRP 3 includes an antenna 17 to an antenna 24, and the TRP 4 includes an antenna 25 to an antenna 32 is used.

As shown in (1) in FIG. 10, in the first configuration, the L TRPs include the TRP 1 and the TRP 2, an antenna 5 to an antenna 8 in the TRP 1 are in the on state, and an antenna 13 to the antenna 16 in the TRP 2 are in the on state. In the first configuration, all antennas in the TRP 3 and the TRP 4 are in the off state.

As shown in (2) in FIG. 10, in the second configuration, the K TRPs include the TRP 1, the TRP 2, the TRP 3, and the TRP 4, and all antennas included in the TRP 1, the TRP 2, the TRP 3, and the TRP 4 are in the on state. In this case, the N antennas include the antenna 1 to an antenna 4 in the TRP 1, the antenna 9 to an antenna 12 in the TRP 2, the antenna 17 to the antenna 24 in the TRP 3, and the antenna 25 to the antenna 32 in the TRP 4.

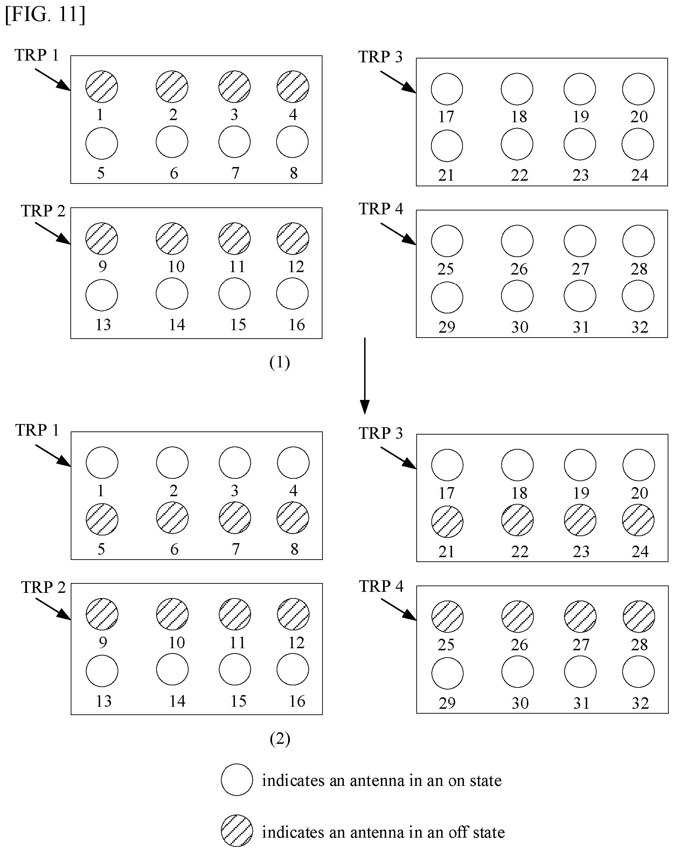

For example, FIG. 11 is a diagram of a first configuration and a second configuration according to an embodiment of this application. (1) in FIG. 11 may be considered as an example of the first configuration, and (2) in FIG. 11 may be considered as an example of the second configuration. In FIG. 11, an example in which the X TRPs included in the access network device include a TRP 1, a TRP 2, a TRP 3, and a TRP 4, the TRP 1 includes an antenna 1 to an antenna 8, the TRP 2 includes an antenna 9 to an antenna 16, the TRP 3 includes an antenna 17 to an antenna 24, and the TRP 4 includes an antenna 25 to an antenna 32 is used.

As shown in (1) in FIG. 11, in the first configuration, the L TRPs include the TRP 1, the TRP 2, the TRP 3, and the TRP 4, an antenna 5 to the antenna 8 in the TRP 1 are in the on state, an antenna 13 to the antenna 16 in the TRP 2 are in the on state, all antennas included in the TRP 3 are in the on state, and all antennas included in the TRP 4 are in the on state. As shown in (2) in FIG. 11, in the second configuration, the K TRPs include the TRP 1, the TRP 2, the TRP 3, and the TRP 4, the antenna 1 to an antenna 4 included in the TRP 1 are in the on state, an antenna 13 to the antenna 16 included in the TRP 2 are in the on state, the antenna 17 to an antenna 20 included in the TRP 3 are in the on state, and an antenna 29 to the antenna 32 included in the TRP 4 are in the on state. In this case, the N antennas include the antenna 1 to an antenna 4 included in the TRP 1. The M antennas include an antenna 5 to the antenna 8 in the TRP 1, an antenna 21 to the antenna 24 in the TRP 3, and the antenna 25 to an antenna 28 in the TRP 4.

S803: The first communication apparatus indicates to turn off the M antennas and/or turn on the N antennas. Alternatively, the first communication apparatus controls to turn off the M antennas and/or turn on the N antennas.

For example, the first communication apparatus may send first indication information to each of at least one of the X TRPs. The first indication information indicates to turn off an antenna that belongs to the M antennas in the TRP, and/or turn on an antenna that belongs to the N antennas in the TRP.

For ease of distinguishing, the at least one of the X TRPs herein is referred to as P TRPs below. P is a positive integer. The P TRPs may be a part or all of the X TRPs. For example, the P TRPs include a TRP in which the M antennas and/or the N antennas are distributed. The first communication apparatus may separately send the first indication information to the P TRPs directly, or may separately send the first indication information to the P TRPs by using the second communication apparatus, or may send the first indication information to a part of the P TRPs directly and send the first indication information to the other part of the P TRPs by using the second communication apparatus. This is not limited in this embodiment of this application.

When content in which the first communication apparatus determines to turn off the M antennas and/or turn on the N antennas is different, content of the first indication information and content of the P TRPs are also different. The following separately provides examples for description.

B1: The first communication apparatus determines that the M antennas need to be turned off.

In the first configuration, the L TRPs include the antenna in the on state. Therefore, the M antennas are distributed on the L TRPs. Correspondingly, the P TRPs may be a part or all of the L TRPs. For example, the P TRPs are a TRP in the L TRPs that includes at least one of the M antennas.

For example, the first indication information may indicate to turn off an antenna that belongs to the M antennas in each of the P TRPs. For example, the first indication information indicates an identifier of an antenna that belongs to the M antennas in each TRP. Specifically, for example, the P TRPs include a first TRP, and the first indication information may indicate an identifier of an antenna that belongs to the M antennas in the first TRP.

The first communication apparatus and the X TRPs may be pre-configured or predefined with an identifier of each antenna in the X TRPs. For example, the first communication apparatus and the X TRPs are configured with the identifier of each antenna in the X TRPs based on a protocol or manually, or the first communication apparatus and the X TRPs are configured with the identifier of each antenna in the X TRPs through negotiation. In this way, after receiving the first indication information, the P TRPs may directly turn off the antenna that belongs to the M antennas.

Optionally, in addition to indicating to turn off the antenna that belongs to the M antennas in each of the P TRPs, the first indication information may further indicate to turn off an antenna in the M antennas other than the antenna in each TRP. In other words, the first indication information may specifically indicate to turn off the M antennas. For example, the first indication information carries identifiers of the M antennas. In this way, after receiving the first indication information, each of the P TRPs may determine to turn off an antenna that belongs to the M antennas in the TRP.

For example, the first configuration is the first configuration shown in (1) in FIG. 9, and the second configuration is the second configuration shown in (2) in FIG. 9. The first communication apparatus may separately send the first indication information to the TRP 1 and the TRP 2, and first indication information corresponding to the TRP 1 indicates to turn off the antenna 1 to the antenna 4. After receiving the first indication information corresponding to the TRP 1, the TRP 1 may directly turn off the antenna 1 to the antenna 4. First indication information corresponding to the TRP 2 indicates to turn off the antenna 9 to the antenna 12. After receiving the first indication information corresponding to the TRP 2, the TRP 2 may directly turn off the antenna 9 to the antenna 12.

Alternatively, the first communication apparatus may send the first indication information to both the TRP 1 and the TRP 2. The first indication information indicates to turn off the M antennas (namely, the antenna 1 to the antenna 4 and the antenna 9 to the antenna 12). After receiving the first indication information, the TRP 1 determines that the TRP 1 includes the antenna 1 to the antenna 4, and may correspondingly turn off the antenna 1 to the antenna 4. After receiving the first indication information, the TRP 2 determines that the TRP 2 includes the antenna 9 to the antenna 12, and may correspondingly turn off the antenna 9 to the antenna 12.

B2: The first communication apparatus determines that the N antennas need to be turned on.

Because any one of the X TRPs may include an antenna in the off state, the P TRPs may be a part or all of the X TRPs. For example, the P TRPs may be a part or all of the L TRPs, or may be a TRP in the X TRPs other than the L TRPs, or a part of the P TRPs belong to the L TRPs and the other part of the TRPs belong to a TRP in the X TRPs other than the L TRPs.

For example, the first indication information may indicate to turn on an antenna that belongs to the N antennas in each of the P TRPs. For example, the first indication information indicates an identifier of the antenna that belongs to the N antennas in each TRP. For example, the P TRPs include a first TRP, and the first indication information may indicate an identifier of an antenna that belongs to the N antennas in the first TRP.

Optionally, in addition to indicate to turn on the antenna that belongs to the N antennas in each of the P TRPs, the first indication information may further indicate to turn on an antenna other than the N antennas. In other words, the first indication information may specifically indicate to turn on the N antennas. For example, the first indication information carries identifiers of the N antennas. Specifically, for example, the P TRPs include a first TRP, and the first indication information may indicate an identifier of an antenna that belongs to the N antennas in the first TRP.

For example, the first configuration is the first configuration shown in (1) in FIG. 10, and the second configuration is the second configuration shown in (2) in FIG. 10. The first communication apparatus may separately send the first indication information to the TRP 1, the TRP 2, the TRP 3, and the TRP 4. First indication information corresponding to the TRP 1 indicates to turn on the antenna 1 to the antenna 4. After receiving the first indication information, the TRP 1 may turn on the antenna 1 to the antenna 4. First indication information corresponding to the TRP 2 indicates to turn on the antenna 9 to the antenna 12. After receiving the first indication information, the TRP 1 may turn on the antenna 9 to the antenna 12. Similarly, first indication information corresponding to the TRP 3 indicates to turn on the antenna 17 to the antenna 24. After receiving the first indication information, the TRP 3 may turn on the antenna 17 to the antenna 24. First indication information corresponding to the TRP 4 indicates to turn on the antenna 25 to the antenna 32. After receiving the first indication information, the TRP 4 may turn on the antenna 25 to the antenna 32.

Alternatively, the first communication apparatus may separately send the first indication information to the TRP 1, the TRP 2, the TRP 3, and the TRP 4. The first indication information indicates to turn on the N antennas (namely, the antenna 1 to the antenna 4, the antenna 9 to the antenna 12, the antenna 17 to the antenna 24, and the antenna 25 to the antenna 32). After receiving the first indication information, the TRP 1 determines that the TRP 1 includes the antenna 1 to the antenna 4, and may correspondingly turn on the antenna 1 to the antenna 4. After receiving the first indication information, the TRP 2 determines that the TRP 2 includes the antenna 9 to the antenna 12, and may correspondingly turn on the antenna 9 to the antenna 12. After receiving the first indication information, the TRP 3 determines that the TRP 3 includes the antenna 17 to the antenna 24, and may correspondingly turn on the antenna 17 to the antenna 24. After receiving the first indication information, the TRP 4 determines that the TRP 3 includes the antenna 25 to the antenna 32, and may correspondingly turn on the antenna 25 to the antenna 32.

B3: The first communication apparatus determines to turn off the M antennas and turn on the N antennas.

Because any one of the X TRPs may include an antenna in the off state, the P TRPs may be a part or all of the X TRPs.

For example, the first indication information may indicate to turn on an antenna that belongs to the N antennas in each of the P TRPs, and/or turn off an antenna that belongs to the M antennas in each TRP. In this way, after receiving the first indication information, each of the P TRPs may determine to turn off the antenna that belongs to the M antennas in the TRP, and/or turn on the antenna that belongs to the N antennas.

Alternatively, the first indication information may directly indicate to turn off the M antennas and the N antennas. For example, the first indication information carries identifiers of the M antennas and identifiers of the N antennas. In this way, after receiving the first indication information, any one of the P TRPs may determine an antenna that belongs to the M antennas and an antenna that belongs to the N antennas in the TRP, to turn off the antenna that belongs to the M antennas and turn on the antenna that belongs to the N antennas.

For example, the first configuration is the first configuration shown in (1) in FIG. 11, and the second configuration is the second configuration shown in (2) in FIG. 11. The first communication apparatus may separately send the first indication information to the TRP 1, the TRP 3, and the TRP 4. First indication information corresponding to the TRP 1 indicates to turn on the antenna 1 to the antenna 4 and turn off the antenna 5 to the antenna 8. After receiving the first indication information, the TRP 1 may turn on the antenna 1 to the antenna 4, and turn off the antenna 5 to the antenna 8. First indication information corresponding to the TRP 3 may indicate to turn off the antenna 21 to the antenna 24. First indication information corresponding to the TRP 4 indicates to turn off the antenna 25 to the antenna 28.

Alternatively, the first communication apparatus may separately send the first indication information to the TRP 1, the TRP 2, the TRP 3, and the TRP 4. The first indication information indicates to turn on the N antennas (namely, the antenna 1 to the antenna 4) and turn off the M antennas (namely, the antenna 5 to the antenna 8, the antenna 21 to the antenna 24, and the antenna 25 to the antenna 28).

Based on the first configuration, after the M antennas are turned off and/or the N antennas are turned on, the configuration of the antenna in the access network device is updated from the first configuration to the second configuration. Because the second configuration includes the K TRPs, after the configuration is updated to the second configuration, the TRP in the on state in the access network device includes the K TRPs.

In this embodiment of this application, when determining that the first configuration is updated to the second configuration, the first communication apparatus may indicate to turn off and/or turn on a corresponding antenna. In this way, hardware of the antenna does not need to be updated or replaced, thereby simplifying a process of updating the antenna configuration. In addition, there may be a plurality of possibilities of the first configuration, the second configuration, and the like in this embodiment of this application, so that the method provided in embodiments of this application is universal.

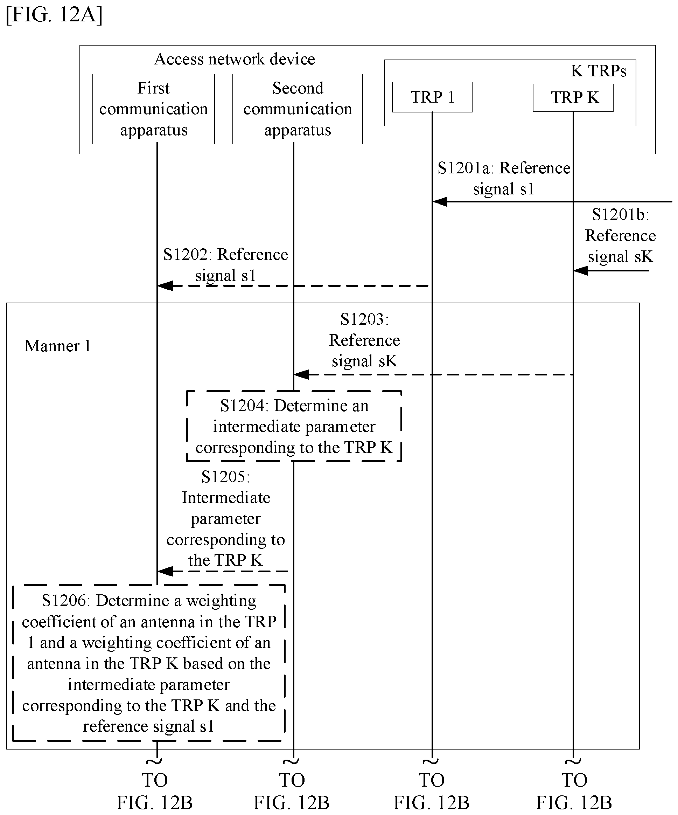

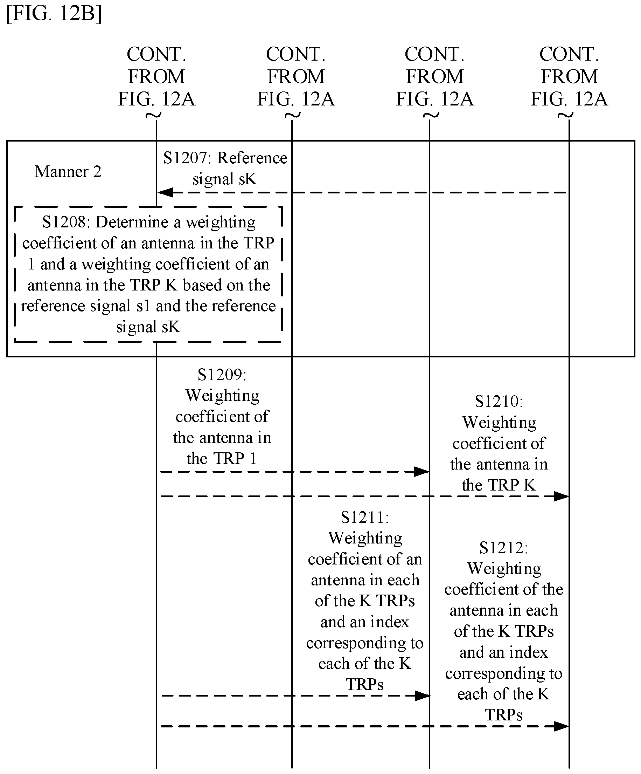

After the configuration of the antenna in the access network device is updated to the second configuration, in a possible implementation, the first communication apparatus may further determine a weighting coefficient of the antenna in the second configuration, so that an antenna in the K TRPs may be beamformed based on a corresponding weighting coefficient. The following provides descriptions with reference to a diagram of a method for determining a weighting coefficient of an antenna in FIG. 12A and FIG. 12B. In FIG. 12A and FIG. 12B, an example in which the K TRPs include a TRP 1 and a TRP K is used for illustration. FIG. 12A and FIG. 12B show steps S1201 and S1202, and the following provides separate descriptions.

S1201: The TRP 1 and the TRP K separately receive a first reference signal. The first reference signal is, for example, an SRS.

In FIG. 12A and FIG. 12B, an example in which S1201 includes S1201a and S1201b is used for description. S1201a is that the TRP 1 receives a reference signal s1. S1201b is that the TRP K receives a reference signal sK. The reference signal s1 and the reference signal sK may be considered as examples of the first reference signal. For example, the TRP 1 may receive the reference signal s1 from the terminal device, and the TRP K may receive the reference signal sK from the terminal device.

S1202: The TRP 1 sends the reference signal s1 to the first communication apparatus. Correspondingly, the first communication apparatus receives the reference signal s1 from the TRP 1. In this case, the reference signal s1 may be considered as an example of a first signal.

S1203: The TRP 2 sends the reference signal sK to the second communication apparatus. Correspondingly, the second communication apparatus receives the reference signal sK from the TRP 1.

S1202 and S1203 may be performed in any sequence. For example, S1202 and S1203 are performed simultaneously; or S1202 is performed before S1203; or S1203 is performed before S1202. This is not specifically limited in this embodiment of this application.

S1204: The second communication apparatus determines an intermediate parameter corresponding to the TRP K.

The second communication apparatus may determine the intermediate parameter corresponding to the TRP K based on the reference signal sK. The intermediate parameter is used to assist in determining a weighting coefficient of the antenna in the K TRPs. The intermediate parameter may be a channel matrix corresponding to the TRP K, or may be a result of performing singular value decomposition (singular value decomposition, SVD) on the channel matrix corresponding to the TRP K.

Optionally, for a manner of calculating the channel matrix, refer to Formula (1):

$$H=YX^{-1} \quad (1)$$

H represents the channel matrix, for example, the channel matrix corresponding to the TRP K, X represents a reference signal received by a receive end, for example, the reference signal sK, $X^{-1}$ represents an inverse matrix of the reference signal received by the receive end, and Y represents a signal before channel processing is performed on the reference signal, for example, a reference signal that corresponds to the reference signal sK and that is sent by the terminal device.

Optionally, for an SVD decomposition result of the channel matrix, refer to Formula (2):

$$H=U\Lambda V^{T} \quad (2)$$

$U\Lambda V^{T}$ may represent the SVD decomposition result of the channel matrix, for example, may be an SVD decomposition result of the channel matrix corresponding to the TRP K.

S1205: The second communication apparatus sends the intermediate parameter corresponding to the TRP K to the first communication apparatus. Correspondingly, the first communication apparatus receives the intermediate parameter that corresponds to the TRP K and that is sent by the second communication apparatus. In this case, the intermediate parameter corresponding to the TRP K may be considered as an example of the first signal.

S1206: The first communication apparatus determines a weighting coefficient of an antenna in the TRP 1 and a weighting coefficient of an antenna in the TRP K based on the intermediate parameter corresponding to the TRP K and the reference signal s1.

When intermediate parameters corresponding to the TRP K are different, manners in which the first communication apparatus determines the weighting coefficient of the antenna in the TRP 1 and the weighting coefficient of the antenna in the TRP K are also different. The following uses C1 and C2 as examples for description.

C1: The intermediate parameter corresponding to the TRP K is the channel matrix corresponding to the TRP K.

In C1, the first communication apparatus determines a channel matrix corresponding to the TRP 1 based on the reference signal s1. The first communication apparatus may combine the channel matrix corresponding to the TRP 1 and the channel matrix corresponding to the TRP K, to obtain a first channel matrix. The first channel matrix may be, for example, an element included in the channel matrix corresponding to the TRP 1. For example, a form of the first channel matrix is $\begin{bmatrix} H1 & 0 \\ 0 & HK \end{bmatrix}$. H1 represents the channel matrix corresponding to the TRP 1, and HK represents the channel matrix corresponding to the TRP K. The first communication apparatus performs SVD decomposition on the first channel matrix. For a formula of SVD decomposition, refer to the foregoing content of Formula (2), to obtain weighting coefficients corresponding to antennas in the TRP 1 and the TRP K. Optionally, the weighting coefficients corresponding to the antennas in the TRP 1 and the TRP K may be, for example, a matrix V in Formula (2).

C2: The intermediate parameter corresponding to the TRP K is the SVD decomposition result of the channel matrix corresponding to the TRP K.

In C2, the first communication apparatus may determine a channel matrix corresponding to the TRP 1 based on the reference signal s2. The first communication apparatus may perform SVD decomposition on the channel matrix corresponding to the TRP 1, to obtain an SVD decomposition result of the channel matrix corresponding to the TRP 1. The first communication apparatus may perform a joint solution based on the SVD decomposition result of the channel matrix corresponding to the TRP 1 and the SVD decomposition result of the channel matrix corresponding to the TRP K, to determine the weighting coefficients corresponding to the antennas in the TRP 1 and the TRP K. Alternatively, the first communication apparatus may perform an inverse solution on the SVD decomposition result of the channel matrix corresponding to the TRP K, to determine the channel matrix corresponding to the TRP K, and jointly perform SVD decomposition on the channel matrix of the TRP 1 and the channel matrix of the TRP K, to obtain the weighting coefficient of the antenna in the TRP 1 and the weighting coefficient of the antenna in the TRP K.

In a possible implementation, the first communication apparatus may be preconfigured or predefined with an expected communication quality parameter of an antenna in each of at least one of the K TRPs, and the expected communication quality parameter of the antenna in each of the at least one TRP may be used to constrain (or adjust) a weighting coefficient of the antenna in each of the at least one TRP. The at least one TRP herein may be a part or all of the K TRPs. The communication quality parameter of the antenna in each of the at least one TRP may indicate the expected communication quality of the antenna in the TRP, for example, may indicate an expected delay or an expected signal strength (specifically, a reference signal received power (reference signal received power, RSRP)) of the antenna in the TRP.

The following describes, by using an expected communication quality parameter of an antenna (for example, referred to as an antenna 1) in one of the at least one TRP as an example, an example of a manner of adjusting a weighting coefficient of the antenna 1 based on the expected communication quality parameter of the antenna 1.

In this case, because communication verification has not been performed on the weighting coefficient that is of the antenna 1 and that is determined by the first communication apparatus based on S1206, in this embodiment of this application, the first communication apparatus may adjust the weighting coefficient of the antenna 1 based on the expected communication quality parameter of the antenna 1 and an actual communication quality parameter of the antenna 1, to improve communication quality of the antenna 1.

The first communication apparatus may measure a third reference signal received by the antenna 1 from the terminal device, to determine the actual communication quality parameter of the antenna 1. Alternatively, the actual communication quality parameter of the antenna 1 may be received by the first communication apparatus from the second communication apparatus. This is not limited in this embodiment of this application.

For example, if the first communication apparatus determines that the actual communication quality parameter of the antenna 1 is inconsistent with the expected communication quality parameter of the antenna 1, the first communication apparatus may adjust the weighting coefficient of the antenna 1 until the actual communication quality parameter of the antenna 1 is consistent with the expected communication quality parameter of the antenna 1. That the actual communication quality parameter of the antenna 1 is consistent with the expected communication quality parameter of the antenna 1 includes that a difference between the actual communication quality parameter of the antenna 1 and the expected communication quality parameter of the antenna 1 is within a first value range. The first value range may be preconfigured or predefined in the first communication apparatus, or may be received from the core network or the terminal device. This is not limited in this embodiment of this application.

If specific content of the expected communication quality parameter of the antenna 1 is different, content of the weighting coefficient of the antenna 1 is adjusted to be also different. The following provides separate descriptions.

G1: The expected communication quality parameter of the antenna 1 includes an expected delay of the antenna 1. Correspondingly, the actual communication quality parameter of the antenna 1 also includes an actual delay of the antenna 1.

If a difference between the actual delay and the expected delay of the antenna 1 is greater than a largest value of the first value range, it indicates that the actual delay of the antenna 1 is large. Therefore, the first communication apparatus may increase the weighting coefficient of the antenna 1 and improve communication quality of the antenna 1. For example, the first communication apparatus may add a first adjustment amount based on the weighting coefficient of the antenna 1. The first adjustment amount may be preconfigured or predefined in the first communication apparatus, or determined by the first communication apparatus and the terminal device through negotiation, or determined by the first communication apparatus and the core network through negotiation, or received by the first communication apparatus from the core network or the terminal device.

If a difference between the actual delay and the expected delay of the antenna 1 is less than a smallest value of the first value range, it indicates that the actual delay of the antenna 1 is large. Therefore, the first communication apparatus may reduce the weighting coefficient of the antenna 1. For example, the first communication apparatus may reduce a second adjustment amount based on the weighting coefficient of the antenna 1. For a manner in which the first communication apparatus obtains the second adjustment amount, refer to the foregoing content in which the first communication apparatus obtains the first adjustment amount.

If a difference between the actual delay and the expected delay of the antenna 1 is within the first value range, the weighting coefficient of the antenna 1 may not be adjusted.

G2: The expected communication quality parameter of the antenna 1 includes an expected signal strength of the antenna 1. Correspondingly, the actual communication quality parameter of the antenna 1 also includes an actual signal strength of the antenna 1.

If a difference between the actual signal strength and the expected signal strength of the antenna 1 is greater than a largest value of a second value range, it indicates that the actual signal strength of the antenna 1 is large. Therefore, the first communication apparatus may reduce the weighting coefficient of the antenna 1. For a manner of reducing the weighting coefficient of the antenna 1, refer to the foregoing content of reducing the weighting coefficient of the antenna 1 in G1.

If a difference between the actual signal strength and the expected signal strength of the antenna 1 is less than a smallest value of a second value range, the first communication apparatus may increase the weighting coefficient of the antenna 1. For a manner of increasing the weighting coefficient of the antenna 1, refer to the foregoing content of increasing the weighting coefficient of the antenna 1 in G1.

If a difference between the actual signal strength and the expected signal strength of the antenna 1 is within a second value range, the weighting coefficient of the antenna 1 may not be adjusted.

G3: The expected communication quality parameter of the antenna 1 includes an expected delay of the antenna 1 and an expected signal strength of the antenna 1. Correspondingly, the actual communication quality parameter of the antenna 1 also includes an actual delay and an actual signal strength of the antenna 1.

In this case, if a difference between the actual delay and the expected delay of the antenna 1 is greater than a largest value of the first value range, and a difference between the actual signal strength and the expected signal strength of the antenna 1 is less than a smallest value of a second value range, the first communication apparatus may increase the weighting coefficient of the antenna 1.

If a difference between the actual delay and the expected delay of the antenna 1 is less than a smallest value of the first value range, and a difference between the actual signal strength and the expected signal strength of the antenna 1 is greater than a largest value of a second value range, the first communication apparatus may reduce the weighting coefficient of the antenna 1.

In another case in G3, the first communication apparatus may not need to adjust the weighting coefficient of the antenna 1.

Certainly, the foregoing provides descriptions by using an example in which the weighting coefficient of the antenna 1 is constrained based on the communication quality parameter of the antenna 1. For a manner of constraining a weighting coefficient of another antenna, also refer to the foregoing process of constraining the weighting coefficient of the antenna 1 based on the communication quality parameter of the antenna 1. Details are not described herein again.

S1203 to S1206 are a manner of determining the weighting coefficients corresponding to the antennas in the TRP 1 and the TRP K according to this embodiment of this application. To simplify description, S1203 to S1206 are referred to as Manner 1 below. In Manner 1, the first communication apparatus may obtain the intermediate parameter of the TRP K from the second communication apparatus. Therefore, a calculation amount of the first communication apparatus can be reduced.

S1207: The TRP K sends the reference signal sK to the first communication apparatus. Correspondingly, the first communication apparatus receives the reference signal sK from the TRP K. In this case, the reference signal sK may be considered as an example of the first signal.

S1208: The first communication apparatus determines a weighting coefficient of an antenna in the TRP 1 and a weighting coefficient of an antenna in the TRP K based on the reference signal s1 and the reference signal sK.

For example, the first communication apparatus may determine a joint channel matrix of the TRP 1 and the TRP K by combining the reference signal s1 and the reference signal sK. For a manner of determining the joint channel matrix of the TRP 1 and the TRP K, refer to the content of Formula (1). The first communication apparatus may perform SVD decomposition on the joint channel matrix of the TRP 1 and the TRP K, to determine the weighting coefficient of the antenna in the TRP 1 and the weighting coefficient of the antenna in the TRP K.

S1207 and S1208 are another manner of determining the weighting coefficients corresponding to the antennas in the TRP 1 and the TRP K according to this embodiment of this application. To simplify description, S1207 and S1208 are referred to as Manner 2 below.

In an actual communication process, the first communication apparatus may determine the weighting coefficients corresponding to the antennas in the TRP 1 and the TRP K in Manner 1 or Manner 2. In other words, S1203 to S1206 and S1207 and S1208 are replaceable steps, and the first communication apparatus either performs S1203 to S1206, or performs S1207 and S1208. In FIG. 12A and FIG. 12B, S1203 to S1206 and S1207 and S1208 are shown by using dashed lines.

S1209: The first communication apparatus sends the weighting coefficient of the antenna in the TRP 1 to the TRP 1. Correspondingly, the TRP 1 receives the weighting coefficient of the antenna in the TRP 1 from the first communication apparatus.

S1210: The first communication apparatus sends the weighting coefficient of the antenna in the TRP K to the TRP K. Correspondingly, the TRP K receives the weighting coefficient of the antenna in the TRP K from the first communication apparatus.

For example, the first communication apparatus may directly send the weighting coefficient of the antenna in the TRP K to the TRP K, or the first communication apparatus may send the weighting coefficient of the antenna in the TRP K to the TRP K by using the second communication apparatus.

S1211: The first communication apparatus sends an index corresponding to each of the K TRPs and a weighting coefficient of an antenna in each of the K TRPs to the TRP 1. Correspondingly, the TRP 1 receives the weighting coefficient of the antenna in each of the K TRPs and the index corresponding to each of the K TRPs from the first communication apparatus.

In this embodiment of this application, that the K TRPs include the TRP 1 and the TRP K is used as an example. Therefore, the index corresponding to each of the K TRPs and the weighting coefficient of the antenna in each of the K TRPs may include an index of the KRP 1, a weighting coefficient of the antenna in the TRP 1, an index of the TRP K, and the weighting coefficient of the antenna in the TRP K.

In this case, the first communication apparatus may be preconfigured or predefined with indexes of the K TRPs, and any one of the K TRPs may prestore an index corresponding to the any TRP.

S1212: The first communication apparatus sends the index corresponding to each of the K TRPs and the weighting coefficient of the antenna in each of the K TRPs to the TRP K. Correspondingly, the TRP K receives the weighting coefficient of the antenna in each of the K TRPs and the index corresponding to each of the K TRPs from the first communication apparatus.

For example, the first communication apparatus may directly send the index corresponding to each of the K TRPs and the weighting coefficient of the antenna in each of the K TRPs to the TRP K. Alternatively, the first communication apparatus may send the index corresponding to each of the K TRPs and the weighting coefficient of the antenna in each of the K TRPs to the TRP K by using the second communication apparatus.

It should be noted that S1209 and S1210 and S1211 and S1212 are two manners of indicating the weighting coefficient of the antenna in the TRP according to this embodiment of this application. In an actual execution process, the first communication apparatus either performs S1209 and S1210, or performs S1211 and S1212. This is not specifically limited in this embodiment of this application. In other words, S1209 and S1210 and S1211 and S1212 are replaceable steps, and are shown by using dashed lines in FIG. 12A and FIG. 12B.

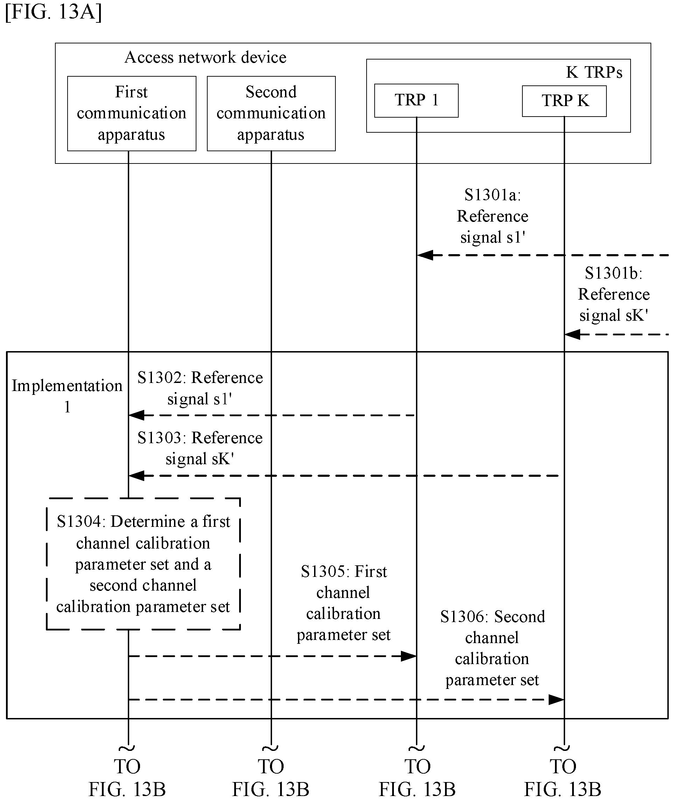

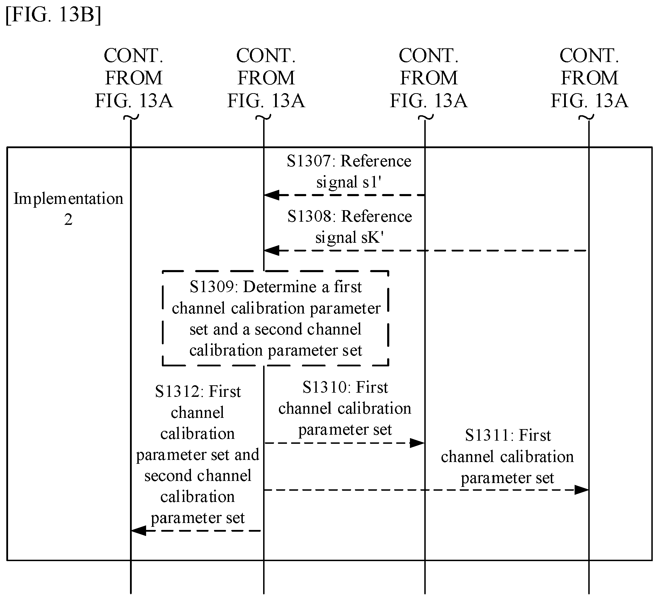

After the configuration of the antenna in the access network device is updated to the second configuration, in a possible implementation, the K TRPs further calibrate a channel of an antenna in the K TRPs. The following provides descriptions with reference to a diagram of an antenna calibration method in FIG. 13A and FIG. 13B. In FIG. 13A and FIG. 13B, an example in which the K TRPs include a TRP 1 and a TRP K is used for illustration. FIG. 13A and FIG. 13B show steps S1301 to S1312, and the following provides separate descriptions.

S1301: The TRP 1 and the TRP K separately receive a second reference signal. The second reference signal is, for example, an SRS.

In FIG. 13A and FIG. 13B, an example in which S1301 includes S1301a and S1301b is used for description. S1301a is that the TRP 1 receives a reference signal s1'. S1301b is that the TRP K receives a reference signal sK'. The reference signal s1' and the reference signal sK' may be considered as examples of the second reference signal. For example, the TRP 1 may receive the reference signal s1' from the terminal device, and the TRP K may receive the reference signal sK' from the terminal device.

The second reference signal and the first reference signal may be the same or different. For example, the reference signal s1' is the same as the reference signal s1 discussed in FIG. 12A and FIG. 12B, and the reference signal sK' is the same as the reference signal sK discussed in FIG. 12A and FIG. 12B; or the reference signal s1' is different from the reference signal s1 discussed in FIG. 12A and FIG. 12B, and the reference signal sK' is different from the reference signal sK discussed in FIG. 12A and FIG. 12B.

S1302: The TRP 1 sends the reference signal s1' to the first communication apparatus. Correspondingly, the first communication apparatus receives the reference signal s1' from the TRP 1.

S1303: The TRP K sends the reference signal sK' to the first communication apparatus. Correspondingly, the first communication apparatus receives the reference signal sK' from the TRP K.

S1304: The first communication apparatus determines a first channel calibration parameter set and a second channel calibration parameter set.

The first channel calibration parameter set includes a channel calibration parameter of an antenna in the TRP 1, or is specifically described as a channel calibration parameter of each antenna in the on state in the TRP 1. The second channel calibration parameter set includes a channel calibration parameter of an antenna in the TRP K, or is specifically described as a channel calibration parameter of each antenna in the on state in the TRP K.

The first channel calibration parameter set includes a physical parameter and/or a transmission parameter of the antenna in the TRP 1. The second channel calibration parameter set includes a physical parameter and/or a transmission parameter of the antenna in the TRP K. The following describes content of the physical parameter and the transmission parameter by using a physical parameter and a transmission parameter of an antenna in the TRP 1 as an example.

The physical parameter of the antenna is used to describe a physical attribute of the antenna, for example, including a quantity of the antennas and/or a standard of the antennas. The transmission parameter of the antenna is used to describe a transmission characteristic of the antenna, for example, including at least one of a delay, a phase, or an amplitude related to the antenna.

The delay related to the antenna may be a delay of the antenna, namely, an absolute value of the delay of the antenna, or may be a delay difference (namely, a relative delay) between the antenna and another antenna in the TRP 1. The phase related to the antenna may be a phase of the antenna, namely, an absolute value of the phase of the antenna, or may be a phase difference (namely, a relative phase) between the antenna and another antenna in the TRP 1. The amplitude related to the antenna may be an amplitude of the antenna, namely, an absolute value of the amplitude of the antenna, or may be an amplitude difference (namely, a relative amplitude) between the antenna and another antenna in the TRP 1.

The foregoing describes the first channel calibration parameter set and the second channel calibration parameter set. The following describes a manner in which the first communication apparatus determines the first channel calibration parameter set and the second channel calibration parameter set. If content of the first channel calibration parameter set is different from content of the second channel calibration parameter set, a manner of determining the first channel calibration parameter set is also different from a manner of determining the second channel calibration parameter set.

D1: The first channel calibration parameter set includes the physical parameter of the antenna in the TRP 1, and the second channel calibration parameter set includes the physical parameter of the antenna in the TRP K.

In this case, the first communication apparatus may determine the physical parameter of the antenna in the TRP 1 and the physical parameter of the antenna in the TRP K based on the first indication information. Alternatively, the first communication apparatus may be preconfigured or predefined with the physical parameter of the antenna in the second configuration, and the first communication apparatus may directly determine the physical parameter of the antenna in the TRP 1 and the physical parameter of the antenna in the TRP K.

In this case, the reference signal s1' and the reference signal sK' may not need to be received. That is, in this case, S1301 and S1302 are optional steps, and are shown by using dashed lines in FIG. 13A and FIG. 13B.

D2: The first channel calibration parameter set includes the transmission parameter of the antenna in the TRP 1, and the second channel calibration parameter set includes the transmission parameter of the antenna in the TRP K.

For example, the first communication apparatus may measure the reference signal s1', to obtain the transmission parameter of the antenna in the TRP 1.

For example, when the transmission parameter of the antenna includes the delay related to the antenna, the first communication apparatus may determine the delay of the antenna based on a first moment at which the terminal device sends a reference signal corresponding to the reference signal s1' and a second moment at which the antenna in the TRP 1 actually receives the reference signal s1'. The delay of the antenna is a difference between the second moment and the first moment. The first communication apparatus may determine the delay of the antenna as the delay related to the antenna. Alternatively, by analogy, the first communication apparatus may determine a delay of another antenna in the TRP 1, and determine a delay difference between the antenna and the another antenna in the TRP 1 as the delay related to the antenna.

When the transmission parameter of the antenna includes the phase related to the antenna, the first communication apparatus may determine the phase of the antenna based on a first phase at which the terminal device sends a reference signal corresponding to the reference signal s1' and a second phase at which the antenna in the TRP 1 actually receives the reference signal s1'. The phase of the antenna is a difference between the second phase and the first phase. The first communication apparatus may determine the phase of the antenna as the phase related to the antenna. Alternatively, by analogy, the first communication apparatus may determine a phase of another antenna in the TRP 1, and determine a phase difference between the antenna and the another antenna in the TRP 1 as the phase related to the antenna.

When the transmission parameter of the antenna includes the amplitude related to the antenna, the first communication apparatus may determine the amplitude related to the antenna based on the foregoing content of determining the phase related to the antenna. Details are not described herein again.

The first communication apparatus may measure the reference signal sK', to obtain the transmission parameter of the antenna in the TRP K. For a manner in which the first communication apparatus obtains the transmission parameter of the antenna in the TRP K, refer to the foregoing content of the transmission parameter of the antenna in the TRP 1. Details are not described herein again.

D3: The first channel calibration parameter set includes the physical parameter and the transmission parameter that are of the antenna in the TRP 1, and the second channel calibration parameter set includes the physical parameter and the transmission parameter that are of the antenna in the TRP K.

In this case, for a manner in which the first communication apparatus determines the physical parameter of the antenna in the TRP 1 and the physical parameter of the antenna in the TRP K, refer to the foregoing content described in D1. Details are not described herein again. For a manner in which the first communication apparatus determines the transmission parameter of the antenna in the TRP 1 and the transmission parameter of the antenna in the TRP K, refer to the foregoing content described in D2. Details are not described herein again.

S1305: The first communication apparatus sends the first channel calibration parameter set to the TRP 1. Correspondingly, the TRP 1 receives the first channel calibration parameter set from the first communication apparatus.

After receiving the first channel calibration parameter set, the TRP 1 may perform channel calibration on each antenna in the TRP 1 based on the first channel calibration parameter set. If content of the first channel calibration parameter set is different, content of calibrating the channel of the antenna is also different. The following provides separate descriptions.

E1: The first channel calibration parameter includes the physical parameter of the antenna in the TRP 1.

The TRP 1 checks, based on the physical parameter of the antenna in the TRP 1, whether an actual physical parameter of the antenna in the TRP 1 is consistent with the physical parameter of the antenna in the TRP 1. If the actual physical parameter of the antenna in the TRP 1 is consistent with the physical parameter of the antenna in the TRP 1, no operation needs to be performed. If the actual physical parameter of the antenna in the TRP 1 is inconsistent with the physical parameter of the antenna in the TRP 1, the TRP 1 may turn on and/or turn off the antenna in the TRP 1, so that the actual physical parameter of the antenna in the TRP 1 is consistent with the physical parameter of the antenna in the TRP 1.

E2: The first channel calibration parameter includes the transmission parameter of the antenna in the TRP 1.

Channels of antennas in the TRP 1 are calibrated in a same manner. The following provides descriptions by using an example in which a channel of the first antenna in the TRP 1 is calibrated.

E2-1: A transmission parameter of the first antenna includes the delay related to the first antenna.

E2-1-1: The transmission parameter of the first antenna includes the delay related to the first antenna, and the delay related to the first antenna is a delay of the first antenna.

In this embodiment of this application, an example in which the delay of the first antenna is a first delay and an expected delay between the access network device and the terminal device is a first expected delay is used. The first expected delay may be predefined or preconfigured in the access network device, or may be determined by the access network device and the terminal device through negotiation.

If the first delay is greater than the first expected delay, when sending information to the terminal device, the first antenna may advance sending of the information by a first delay value; and when receiving information from the terminal device, the first antenna may delay receiving of the information by a first delay difference. The first delay difference is a difference between the first delay and the first expected delay.

Alternatively, if the first delay is equal to the first expected delay, when sending information to the terminal device, the first antenna may not adjust a moment at which the first antenna sends the information; or when receiving information from the terminal device, the first antenna may not adjust a moment at which the information is received from the terminal device.

Alternatively, if the first delay is less than the first expected delay, when sending information to the terminal device, the first antenna may delay sending of the information by the first delay value; and when receiving information from the terminal device, the first antenna may advance receiving of the information by a first delay difference.

E2-1-2: The transmission parameter of the first antenna includes the delay related to the first antenna, and the delay related to the first antenna is a delay difference between the first antenna and another antenna.

In this embodiment of this application, the delay difference between the first antenna and the another antenna is used as a second delay.

If the first delay is greater than 0, when sending information to the terminal device, the first antenna may advance sending of the information by the second delay relative to the another antenna; and when receiving information from the terminal device, the first antenna may delay receiving of the information by the second delay relative to the another antenna.

Alternatively, if the first delay is equal to 0, when sending information to the terminal device, the first antenna and the another antenna may simultaneously send the information; or when receiving information from the terminal device, the first antenna and the another antenna may simultaneously receive the information.

Alternatively, if the first delay is less than 0, when sending information to the terminal device, the first antenna may delay sending of the information by the second delay relative to the another antenna; and when receiving information from the terminal device, the first antenna may advance receiving of the information by the second delay relative to the another antenna.

E2-2: The transmission parameter of the first antenna includes the phase related to the first antenna.

In this case, for content of calibrating the phase of the first antenna, refer to the content of calibrating the delay of the first antenna in E2-1. Details are not described herein again.

E2-3: The transmission parameter of the first antenna includes the amplitude related to the first antenna.

In this case, for content of calibrating the amplitude of the first antenna, refer to the content of calibrating the delay of the first antenna in E2-1. Details are not described herein again.

S1306: The first communication apparatus sends the second channel calibration parameter set to the TRP K. Correspondingly, the TRP K receives the second channel calibration parameter set from the second communication apparatus.

After receiving the second channel calibration parameter set, the TRP K may perform channel calibration on each antenna in the TRP K based on the second channel calibration parameter set. For a manner of performing channel calibration on each antenna in the TRP K, refer to the foregoing content of performing channel calibration on each antenna in the TRP 1. Details are not described herein again.

S1307: The TRP 1 sends the reference signal s1' to the second communication apparatus. Correspondingly, the second communication apparatus receives the reference signal s1' from the TRP 1.

S1308: The TRP K sends the reference signal sK' to the second communication apparatus. Correspondingly, the second communication apparatus receives the reference signal sK' from the TRP K'.

S1309: The second communication apparatus determines the first channel calibration parameter set and the second channel calibration parameter set.

For content of the first channel calibration parameter set and the second channel calibration parameter set, respectively refer to the content of the first channel calibration parameter set and the content of the second channel calibration parameter set. For a manner in which the second communication apparatus determines the first channel calibration parameter set, refer to the foregoing content of determining the first channel calibration parameter set by the first communication apparatus, and for a manner of determining the second channel calibration parameter set by the second communication apparatus, refer to the foregoing content of determining the second channel calibration parameter set by the first communication apparatus.

S1310: The second communication apparatus sends the first channel calibration parameter set to the TRP 1. Correspondingly, the TRP 1 receives the first channel calibration parameter set from the second communication apparatus.

After receiving the second channel calibration parameter set, the TRP 1 may perform channel calibration on each antenna in the TRP 1 based on the first channel calibration parameter set. For a manner of performing channel calibration on each antenna in the TRP 1, refer to the foregoing content of performing channel calibration on each antenna in the TRP 1. Details are not described herein again.

S1311: The second communication apparatus sends the second channel calibration parameter set to the TRP K. Correspondingly, the TRP K receives the second channel calibration parameter set from the second communication apparatus.

After receiving the second channel calibration parameter set, the TRP K may perform channel calibration on each antenna in the TRP K based on the second channel calibration parameter set. For a manner of performing channel calibration on each antenna in the TRP K, refer to the foregoing content of performing channel calibration on each antenna in the TRP K. Details are not described herein again.

S1312: The second communication apparatus sends the first channel calibration parameter set and the second channel calibration parameter set to the first communication apparatus. Correspondingly, the first communication apparatus receives the first channel calibration parameter set and the second channel calibration parameter set from the second communication apparatus.

Optionally, the second communication apparatus may cache the first channel calibration parameter set and the second channel calibration parameter set.

It should be understood that S1302 to S1306 are a manner of calibrating the channel of the antenna according to this embodiment of this application, and are briefly referred to as Implementation 1 below. S1307 to S1312 are another manner of calibrating the channel of the antenna according to this embodiment of this application, and are briefly referred to as Implementation 2 below. In an actual execution process, either S1302 to S1306 or S1307 to S1312 are performed. In other words, S1302 to S1306 and S1307 to S1312 are replaceable steps, and are shown by dashed lines in FIG. 13A and FIG. 13B.

It may be understood that, to implement functions in the foregoing embodiments, the first communication apparatus includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

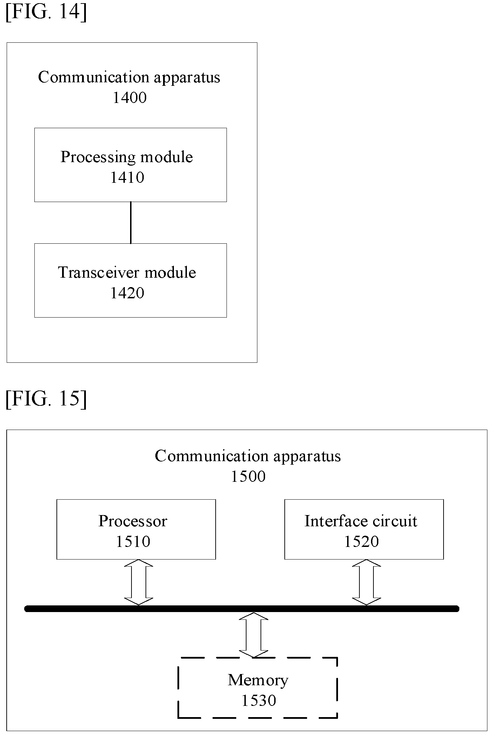

FIG. 14 is a diagram of a structure of a communication apparatus according to an embodiment of this application. These communication apparatuses may be configured to implement the functions of the first communication apparatus or the second communication apparatus in the foregoing method embodiments, and therefore can further implement the beneficial effects of the foregoing method embodiments. In this embodiment of this application, the communication apparatus may be the first communication apparatus in FIG. 5A, FIG. 5B, FIG. 6, or FIG. 7, or may be the second communication apparatus in FIG. 7.

As shown in FIG. 14, the communication apparatus 1400 includes a processing module 1410 and a transceiver module 1420. The communication apparatus 1400 is configured to implement the functions of the first communication apparatus in any one of the foregoing method embodiments.

For example, the communication apparatus 1400 is configured to implement the functions of the first communication apparatus in the method embodiment shown in FIG. 8.

For example, the processing module 1410 is configured to perform steps S801 and S802, and the transceiver module 1420 is configured to perform step S803.

Optionally, the communication apparatus 1400 may be further configured to implement the possible implementation shown in FIG. 12A and FIG. 12B.

For example, the processing module 1410 is configured to perform steps S1206 and S1208. The transceiver module 1420 is configured to receive reference signals s1 and sK, and an intermediate parameter corresponding to a TRP K, and may be further configured to send a weighting coefficient of an antenna in a TRP 1, a weighting coefficient of an antenna in the TRP K, and the like. For the reference signals s1 and sK, the intermediate parameter corresponding to the TRP K, the weighting coefficient of the antenna, the weighting coefficient of the antenna in the TRP K, and the like, refer to the foregoing content described in FIG. 12A and FIG. 12B. Details are not described herein again.

Optionally, the communication apparatus 1400 may be further configured to implement the possible implementation shown in FIG. 13A and FIG. 13B.

For example, the processing module 1410 is configured to perform step S1304. The transceiver module 1420 is configured to receive reference signals s1' and sK', a first channel calibration parameter set, and a second channel calibration parameter set, and may be further configured to send the first channel calibration parameter set, the second channel calibration parameter set, and the like. For the reference signals s1' and sK', the first channel calibration parameter set, the second channel calibration parameter set, and the like, refer to the content described in FIG. 13A and FIG. 13B. Details are not described herein again.

More detailed descriptions of the processing module 1410 and the transceiver module 1420 may be directly obtained by referring to the related descriptions in the method embodiments shown in FIG. 8, FIG. 12A and FIG. 12B, and FIG. 13A and FIG. 13B. Details are not described herein again.

FIG. 15 is a diagram of a structure of another communication apparatus according to an embodiment of this application. As shown in FIG. 15, a communication apparatus 1500 includes a processor 1510 and an interface circuit 1520. The processor 1510 and the interface circuit 1520 are coupled to each other. It may be understood that the interface circuit 1520 may be a transceiver or an input/output interface. Optionally, the communication apparatus 1500 may further include a memory 1530, configured to: store instructions executed by the processor 1510, or store input data required by the processor 1510 to run the instructions, or store data generated after the processor 1510 runs the instructions.

When the communication apparatus 1500 is configured to implement the method shown in FIG. 8, the processor 1510 is configured to implement the function of the processing module 1410, and the interface circuit 1520 is configured to implement the function of the transceiver module 1420.

When the communication apparatus is a module used in a base station, the module in the base station implements a function of the base station in the method embodiments. The module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The base station module herein may be a baseband chip of the base station, or may be a DU or another module. The DU herein may be an open central processing unit (CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor. The memory in this embodiment of this application may include a volatile memory (volatile memory), for example, a random access memory (random access memory, RAM). The memory may further include a non-volatile memory (non-volatile memory), for example, a read-only memory (read-only memory, ROM), a flash memory, a hard disk drive (hard disk drive, HDD), or a solid-state drive (solid-state drive, SSD).

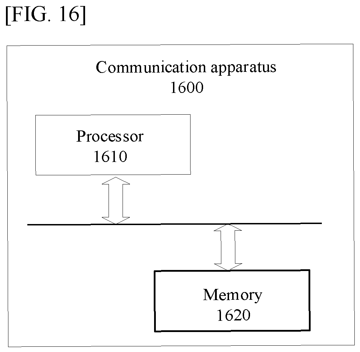

An embodiment of this application provides another example of a communication apparatus. The communication apparatus includes at least one processor and at least one memory. The at least one processor is coupled to the at least one memory. The at least one memory is configured to store instructions. When the instructions are executed by the at least one processor, the communication apparatus is caused to perform the method in the foregoing embodiments. An example in which the communication apparatus includes one processor and one memory is used. As shown in FIG. 16, a communication apparatus 1600 includes a processor 1610 and a memory 1620. The processor 1610 is coupled to the memory 1620. The memory 1620 stores instructions. When the instructions stored in the memory 1620 are executed by the processor 1610, the communication apparatus 1600 performs the method performed by the network device in the foregoing embodiments.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

An embodiment of this application provides a chip system. The chip system includes a processor and an interface. The processor is configured to invoke and run instructions from the interface. When executing the instructions, the processor implements any one of the foregoing methods, for example, the method in any one of FIG. 8, FIG. 12A and FIG. 12B, or FIG. 13A and FIG. 13B.

An embodiment of this application provides a computer-readable storage medium. The computer-readable storage medium is configured to store a computer program or instructions; and when the computer program or the instructions are run, any one of the foregoing methods, for example, the method in any one of FIG. 8, FIG. 12A and FIG. 12B, or FIG. 13A and FIG. 13B, is implemented.

An embodiment of this application provides a computer program product including instructions. When the computer program product runs on a computer, any one of the foregoing methods, for example, the method in any one of FIG. 8, FIG. 12A and FIG. 12B, or FIG. 13A and FIG. 13B, is implemented.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean execution sequences, and the execution sequences of the processes should be determined based on functions and internal logic of the processes.

**Claims**

1. A communication method, applied to a first communication apparatus, wherein the first communication apparatus is deployed to communicate with X transmission and reception points TRPs, wherein X is an integer greater than 1, and the method comprises:

   determining that a configuration of an antenna needs to be updated from a first configuration to a second configuration, wherein an antenna in the first configuration and an antenna in the second configuration differ in at least one of a coverage area, a direction, and a strength that are of a beam;
   determining M antennas that need to be turned off and/or N antennas that need to be turned on in the X TRPs, wherein both N and M are positive integers; and
   sending first indication information to each of at least one of the X TRPs, wherein the first indication information indicates to turn off an antenna that is in each TRP and that belongs to the M antennas and/or turn on an antenna that is in each TRP and that belongs to the N antennas, and the second configuration is formed by turning off the M antennas and/or the N antennas in the first configuration.

2. The method according to claim 1, wherein determining that the configuration of the antenna needs to be updated from the first configuration to the second configuration comprises:

   receiving second indication information from a core network, wherein the second indication information indicates that the configuration of the antenna needs to be updated to the second configuration; or
   determining, based on one or both of communication quality and/or information about a served user that are of the first communication apparatus, that the configuration of the antenna needs to be updated from the first configuration to the second configuration.

3. The method according to claim 2, wherein the communication quality comprises communication interference from the first communication apparatus;

   when the communication interference from the first communication apparatus is greater than or equal to a first threshold, a quantity of antennas in the second configuration is greater than a quantity of antennas in the first configuration; or
   when the communication interference from the first communication apparatus is less than a second threshold, a quantity of antennas in the second configuration is less than a quantity of antennas comprised in the first configuration; and
   the first threshold is greater than the second threshold.

4. The method according to claim 2, wherein the information about the served user comprises a quantity of served users;

   when the quantity of served users of the first communication apparatus is greater than or equal to a third threshold, a quantity of antennas comprised in the second configuration is greater than a quantity of antennas comprised in the first configuration; or
   when the quantity of served users of the first communication apparatus is less than a fourth threshold, a quantity of antennas in the second configuration is less than a quantity of antennas comprised in the first configuration; and
   the third threshold is greater than the fourth threshold.

5. The method according to any one of claims 1 to 4, wherein

   the N antennas are distributed in one of the X TRPs; or
   the N antennas are distributed in at least two of the X TRPs.

6. The method according to any one of claims 1 to 5, wherein the antenna in the first configuration is distributed on L TRPs, and the L TRPs belong to the X TRPs, wherein L is a positive integer; and

the M antennas are distributed in one of the L TRPs; or
the M antennas are distributed in at least two of the L TRPs.

7. The method according to any one of claims 1 to 6, wherein the antenna in the first configuration is distributed on L TRPs, and the L TRPs belong to the X TRPs, wherein L is a positive integer; and

the L TRPs are deployed at different geographical locations; or
the L TRPs are co-located.

8. The method according to any one of claims 1 to 7, wherein the antenna in the first configuration is distributed on L TRPs, and the L TRPs belong to the X TRPs, wherein L is a positive integer; and

any two of the L TRPs comprise a same quantity of antennas; or
at least two of the L TRPs comprise different quantities of antennas.

9. The method according to any one of claims 1 to 8, wherein the antenna in the first configuration is distributed on L TRPs, the antenna in the second configuration is distributed on K TRPs, and the L TRPs and the K TRPs all belong to the X TRPs, wherein L and K are positive integers; and
after sending the first indication information to each of the at least one of the X TRPs, the method further comprises one of the following:

sending a weighting coefficient of an antenna in each of the K TRPs to each TRP; or
separately sending an index corresponding to each of the K TRPs and a weighting coefficient of an antenna in each of the K TRPs to the K TRPs, wherein
the weighting coefficient is used to constrain at least one of a coverage area, a direction, and a strength of a beam of an antenna.

10. The method according to claim 9, the method further comprising:

obtaining K first signals corresponding to the K TRPs, wherein each of the K first signals is a first reference signal or an intermediate parameter received by any one of the K TRPs, and the intermediate parameter is determined based on the first reference signal received by the any TRP; and
determining weighting coefficients of antennas in the K TRPs based on the K first signals.

11. The method according to claim 10, wherein after determining the weighting coefficients of the antennas in the K TRPs based on the K first signals, the method further comprises:
adjusting a weighting coefficient of an antenna in the any TRP based on an expected communication quality parameter of the antenna in the any TRP and an actual communication quality parameter of the antenna in the any TRP.

12. The method according to any one of claims 1 to 11, wherein the antenna in the second configuration is distributed on K TRPs, the K TRPs all belong to the X TRPs, wherein K is a positive integer, and the method further comprises:

receiving a channel calibration parameter of an antenna in any one of the K TRPs, wherein
the channel calibration parameter of the any TRP comprises one or both of a physical parameter and a transmission parameter that are of the antenna in the any TRP, and is used to calibrate the antenna in the any TRP.

13. The method according to any one of claims 1 to 12, wherein the antenna in the second configuration is distributed on K TRPs, the K TRPs all belong to the X TRPs, wherein K is a positive integer, and the method further comprises:

measuring a second reference signal from any one of the K TRPs, to determine a transmission parameter of an antenna in the any TRP; and
sending the transmission parameter of the antenna in the any TRP to the any TRP, wherein the transmission parameter of the antenna in the any TRP is used to calibrate the antenna in the any TRP.

14. The method according to claim 12 or 13, wherein the transmission parameter of the antenna in the any TRP indicates one of the following:

at least one of a delay, a phase, or an amplitude of the antenna in the any TRP; or
at least one of a delay difference, a phase difference, or an amplitude difference between one antenna and another antenna that are in the any TRP.

15. The method according to claim 12, wherein the physical parameter of the antenna in the any TRP comprises:

a quantity of antennas in an on state; and
an arrangement manner of the antennas in the on state; or
a standard of the antenna in the on state.

16. A communication apparatus, wherein the apparatus is deployed to communicate with X transmission and reception points TRPs, wherein X is an integer greater than 1, and the apparatus comprises:

a processing module, configured to determine that a configuration of an antenna needs to be updated from a first configuration to a second configuration, wherein an antenna in the first configuration and an antenna in the second configuration differ in at least one of a coverage area, a direction, and a strength that are of a beam, wherein
the processing module is configured to determine M antennas that need to be turned off and/or N antennas that need to be turned on in the X TRPs, wherein both N and M are positive integers; and
a transceiver module, configured to send first indication information to each of at least one of the X TRPs, wherein the first indication information indicates to turn off an antenna that is in each TRP and that belongs to the M antennas and/or turn on an antenna that is in each TRP and that belongs to the N antennas, and the second configuration is formed by turning off the M antennas and/or the N antennas in the first configuration.

17. The apparatus according to claim 16, wherein the processing module is specifically configured to:

receive second indication information from a core network, wherein the second indication information indicates that the configuration of the antenna needs to be updated to the second configuration; or
determine, based on one or both of communication quality and/or information about a served user that are of the communication apparatus, that the configuration of the antenna needs to be updated from the first configuration to the second configuration.

18. The apparatus according to claim 16, wherein the communication quality comprises communication interference from the communication apparatus;

when the communication interference from the communication apparatus is greater than or equal to a first threshold, a quantity of antennas in the second configuration is greater than a quantity of antennas in the first configuration; or
when the communication interference from the communication apparatus is less than a second threshold, a quantity of antennas in the second configuration is less than a quantity of antennas comprised in the first configuration; and
the first threshold is greater than the second threshold.

19. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 15 through a logic circuit or by executing code instructions.

20. A computer-readable storage medium, wherein the storage medium stores a computer program or instructions, and when the computer program or the instructions are executed by a communication apparatus, the method according to any one of claims 1 to 15 is implemented.

[FIG. 1]

Access network device

Terminal device

[FIG. 2]

[FIG. 3]

[FIG. 4]

[FIG. 5A]

Access network device

TRP 1

Antenna ... Antenna

TRP 2

First communication apparatus

Antenna ... Antenna

...

TRP X

Antenna ... Antenna

[FIG. 5B]

[FIG. 6]

[FIG. 7]

Access network device

First communication apparatus

Second communication apparatus

TRP 1

Antenna ... Antenna

...

TRP 2

Antenna ... Antenna

TRP X

Antenna ... Antenna

[FIG. 8]

Access network device

First communication apparatus

TRP 1

TRP 2

X TRPs
...

S801: Determine that a configuration of an antenna needs to be updated from a first configuration (corresponding to L TRPs) to a second configuration (corresponding to K TRPs)

S802: Determine M antennas that need to be turned off and/or N antennas that need to be turned on in the X TRPs

S803: Indicate to turn off the M antennas and/or turn on the N antennas

[FIG. 9]

(1)

(2)

(3)

◯ indicates an antenna in an on state

▨ indicates an antenna in an off state

[FIG. 10]

(1)

(2)

◯ indicates an antenna in an on state

⊘ indicates an antenna in an off state

[FIG. 11]

indicates an antenna in an on state

indicates an antenna in an off state

[FIG. 12A]

[FIG. 12B]

| CONT. FROM FIG. 12A | CONT. FROM FIG. 12A | CONT. FROM FIG. 12A | CONT. FROM FIG. 12A |
|---|---|---|---|

Manner 2 | S1207: Reference signal sK

S1208: Determine a weighting coefficient of an antenna in the TRP 1 and a weighting coefficient of an antenna in the TRP K based on the reference signal s1 and the reference signal sK

S1209: Weighting coefficient of the antenna in the TRP 1

S1210: Weighting coefficient of the antenna in the TRP K

S1211: Weighting coefficient of an antenna in each of the K TRPs and an index corresponding to each of the K TRPs

S1212: Weighting coefficient of the antenna in each of the K TRPs and an index corresponding to each of the K TRPs

[FIG. 13A]

[FIG. 13B]

CONT. FROM FIG. 13A   CONT. FROM FIG. 13A   CONT. FROM FIG. 13A   CONT. FROM FIG. 13A

Implementation 2

S1307: Reference signal s1'

S1308: Reference signal sK'

S1309: Determine a first channel calibration parameter set and a second channel calibration parameter set

S1312: First channel calibration parameter set and second channel calibration parameter set

S1310: First channel calibration parameter set

S1311: First channel calibration parameter set

[FIG. 14]

Communication apparatus
1400

Processing module
1410

Transceiver module
1420

[FIG. 15]

Communication apparatus
1500

Processor
1510

Interface circuit
1520

Memory
1530

[FIG. 16]

Communication apparatus
1600

Processor
1610

Memory
1620

## INTERNATIONAL SEARCH REPORT

| International application No. |
|---|
| **PCT/CN2024/117589** |

| A. | CLASSIFICATION OF SUBJECT MATTER |
|---|---|

H04W 16/28(2009.01)i

According to International Patent Classification (IPC) or to both national classification and IPC

| B. | FIELDS SEARCHED |
|---|---|

Minimum documentation searched (classification system followed by classification symbols)

IPC: H04W,H04L,H04B

Documentation searched other than minimum documentation to the extent that such documents are included in the fields searched

Electronic data base consulted during the international search (name of data base and, where practicable, search terms used)

3GPP, CJFD, CNTXT, DWPI, ENTXT, ENTXTC, VEN, WPABS, WPABSC: 更换, 更新, 开启, 关断, 天线, 指示, TRP, 形态, 波束, 阈值, update, change, open, close, antenna, indicat+, threshold

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2020186511 A1 (HUAWEI TECHNOLOGIES CO., LTD.) 24 September 2020 (2020-09-24) description, page 1, line 28 to page 7, line 24 | 1-20 |
| X | CN 110890632 A (HUAWEI TECHNOLOGIES CO., LTD.) 17 March 2020 (2020-03-17) description, paragraphs [0004]-[0049] | 1-20 |
| A | US 2022014255 A1 (SKYLO TECHNOLOGIES, INC.) 13 January 2022 (2022-01-13) entire document | 1-20 |
| A | WO 2020221452 A1 (HUAWEI TECHNOLOGIES CO., LTD. et al.) 05 November 2020 (2020-11-05) entire document | 1-20 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 December 2024** | **11 December 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/117589**

| Patent document cited in search report | | | Publication date (day/month/year) | Patent family member(s) | | | Publication date (day/month/year) |
|---|---|---|---|---|---|---|---|
| WO | 2020186511 | A1 | 24 September 2020 | None | | | |
| CN | 110890632 | A | 17 March 2020 | US | 2023088956 | A1 | 23 March 2023 |
| | | | | US | 2021203395 | A1 | 01 July 2021 |
| | | | | EP | 3840452 | A1 | 23 June 2021 |
| | | | | WO | 2020052691 | A1 | 19 March 2020 |
| | | | | KR | 20210053965 | A | 12 May 2021 |
| US | 2022014255 | A1 | 13 January 2022 | US | 11451288 | B2 | 20 September 2022 |
| | | | | WO | 2022010600 | A1 | 13 January 2022 |
| WO | 2020221452 | A1 | 05 November 2020 | None | | | |

Form PCT/ISA/210 (patent family annex) (July 2022)

**REFERENCES CITED IN THE DESCRIPTION**

**Patent documents cited in the description**

- CN 202311284929